# EUROPÄISCHE PATENTSCHRIFT

(11) **EP 2 005 651 B1**
(45) Veröffentlichungstag und Bekanntmachung des Hinweises auf die Patenterteilung: **08.09.2010**
(21) Anmeldenummer: 07724162.8
(22) Anmeldetag: 11.04.2007
(51) Int. Cl.: H04L 12/28, G05B 19/418

(54) **SENDE-EMPFANGSGERÄT ZUR DRAHTLOSEN ÜBERTRAGUNG VON FELDGERÄTESIGNALEN**
TRANSCEIVER FOR WIRELESS TRANSMISSION OF FIELD DEVICE SIGNALS
APPAREIL D'EMISSION ET DE RECEPTION POUR LA TRANSMISSION SANS FIL DE SIGNAUX D'APPAREIL DE TERRAIN

(30) Priorität: 12.04.2006 DE 102006017243; 12.04.2006 US 791720 P
(43) Veröffentlichungstag der Anmeldung: 24.12.2008
(73) Patentinhaber: VEGA Grieshaber KG, 77709 Wolfach (DE)
(72) Erfinder: ISENMANN, Andreas, 77716 Haslach i. K. (DE); DECK, Thomas, 77709 Wolfach (DE)
(74) Vertreter: Kopf, Korbinian Paul
(86) Internationale Anmeldenummer: PCT/EP2007/003221
(87) Internationale Veröffentlichungsnummer: WO 2007/118656

(56) Entgegenhaltungen:
- EP-A- 0 994 399
- DE-A1-102005 008 488
- DE-U1-202004 000 928
- US-A1- 2003 073 884

## Beschreibung

### Verwandte Anmeldungen

### Technisches Gebiet

Die vorliegende Erfindung betrifft die Messtechnik. Insbesondere betrifft die vorliegende Erfindung ein Sende-Empfangsgerät zur drahtlosen Übertragung von Feldgerätesignalen, eine drahtlose Messwertübertragungsanordnung und ein Verfahren zur drahtlosen Übertragung von Feldgerätesignalen.

### Hintergrund der Erfindung

Feldgerätesignale sind Signale, die von einem Feldgerät, einem Sensor oder einem Messgerät bereitgestellt werden. In einem Feldgerätesignal sind Ergebnisse von Messungen, also Messwerte, verpackt oder kodiert. Im Umfeld der Mess- und Regeltechnik, wie auch der prozessverarbeitenden Systeme, wo Sensoren bzw. Aktoren an eine Steuerung oder ein Auswertegerät angebunden sind, werden heute verstärkt digital kommunizierende Geräte eingesetzt. Für die Kommunikation dieser Geräte untereinander kommen hierbei Feldbusse wie HART^{®}-Bus, Profibus oder Fieldbus Foundation zum Einsatz.

Die Verdrahtung der beteiligten Geräte gestaltet sich hierbei unter Umständen schwierig, wenn z. B. Hindernisse, wie Flussläufe oder ähnliches zu überwinden sind. Auch ist eine vorhandene Verdrahtung nur schwer änderbar, wenn sie einmal installiert ist. Ebenso kann eine notwendige Erweiterung einer Messanordnung Probleme bereiten, da fest installierte Bussysteme meist die Einbauorte von Feldgeräten vorgeben. Dies gilt insbesondere bei einer Verkabelung mittels Conduits. Die Verdrahtung der Auswertegeräte und Feldgeräte kann bei komplizierten geografischen Strukturen oder weit auseinander liegenden Feldgeräten, Messgeräten, Sensoren oder Aktoren aufwändig und teuer werden. Außerdem ist eine Verdrahtung bezogen auf Änderungen nicht flexibel.

EP 0 994 399 A2 beschreibt ein Überwachungssystem für Ventile, welches einen Sensor aufweist.

US 2003/0073884 A1 beschreibt eine medizinische Überwachungseinrichtung zur Messung physiologischer Parameter, welche tragbar ist und eine Kommunikationseinheit aufweist.

DE 20 2004 000 928 U1 beschreibt eine Schaltungsanordnung zur Codeumwandlung, die keinen vollständigen Computer benötigt.

### Darstellung der Erfindung

Es ist eine Aufgabe der vorliegenden Erfindung eine einfache Übertragung von Messwerten anzugeben.

Demgemäß wird ein Sende-Empfangsgerät zur drahtlosen Übertragung von Feldgerätesignalen, eine drahtlose Messwertübertragungsanordnung und ein Verfahren zur drahtlosen Übertragung von Feldgerätesignalen angegeben.

Gemäß einem Ausführungsbeispiel der vorliegenden Erfindung wird ein Sende-Empfangsgerät zur drahtlosen Übertragung eines Feldgerätesignals bereitgestellt. Das Sende-Empfangsgerät weist eine Funkschnittstelle zum drahtlosen Kommunizieren und eine Feldgeräteschnittstelle zum Anschluss an ein Feldgerät oder zum Anschluss an ein Auswertegerät auf. Das Sende-Empfangsgerät ist dabei ausgebildet, ein Feldgerätesignal, also einen Messwert oder einen Steuerbefehl, zwischen der Funkschnittstelle und der Feldgeräteschnittstelle umzuwandeln, wobei das Sende-Empfangsgerät und insbesondere die Feldgeräteschnittstelle ausgebildet ist, in einem ersten Betriebszustand eine feldgerätspezifische Funktion an der Feldgeräteschnittstelle bereitzustellen. Das Sende-Empfangsgerät und insbesondere die Feldgeräteschnittstelle ist ferner ausgebildet in einem zweiten Betriebszustand an der Feldgeräteschnittstelle eine auswertegerätspezifische Funktion bereitzustellen. Der Betriebszustand, in dem sich das Sende-Empfangsgerät befindet, ist dabei vorgebbar.

Wenn das Sende-Empfangsgerät oder die Sende-Empfangseinrichtung eine feldgerätspezifische Funktion ausführt, kann das Sende-Empfangsgerät über die Feldgeräteschnittstelle mit dem Feldgerät gekoppelt sein. Dabei kann das Sende-Empfangsgerät Funktionen wie beispielsweise das Abfragen des Feldgerätes oder das Anregen des Feldgerätes zur Durchführung einer Messung ausführen.

Bei der Ausführung einer auswertegerätspezifischer Funktion kann die Sende-Empfangseinrichtung mit einem Auswertegerät verbunden sein oder die Sende-Empfangseinrichtung kann auch selbst einen Messwert an einer Feldgeräteschnittstelle bereitstellen.

Gemäß einem weiteren exemplarischen Ausführungsbeispiel der vorliegenden Erfindung wird eine drahtlose Messwertübertragungsanordnung mit einem ersten Sende-Empfangsgerät und einem zweiten Sende-Empfangsgerät angegeben. Bei dieser drahtlosen Messwertübertragungsanordnung befindet sich das erste Sende-Empfangsgerät in einem ersten Betriebszustand und das zweite Sende-Empfangsgerät in einem zweiten Betriebszustand. Dabei ist die drahtlose Messwertübertragungsanordnung eingerichtet ein an der Feldgeräteschnittstelle des ersten Sende-Empfangsgeräts aufgenommenes Feldgerätesignal an der Feldgeräteschnittstelle des zweiten Sende-Empfangsgeräts bereitzustellen.

Gemäß noch einem anderen exemplarischen Ausführungsbeispiel der vorliegenden Erfindung wird ein Verfahren zur drahtlosen Übertragung von Feldgerätesignalen mittels eines Sende-Empfangsgerätes angegeben. Bei dem Verfahren wird zunächst von dem Sende-Empfangsgerät ein erster Betriebszustand eingenommen oder es wird ein zweiter Betriebszustand eingenommen werden, wobei in dem ersten Betriebszustand an einer Feldgeräteschnittstelle eine feldgerätspezifische Funktion bereitgestellt wird und wobei in dem zweiten Betriebszustand an einer feldgerätspezifischen Schnittstelle eine auswertegerätspezifische Funktion bereitgestellt wird. Das Feldgerätesignal wird zwischen einer Funkschnittstelle und der Feldgeräteschnittstelle gewandelt.

Die Unterscheidung zwischen einem ersten Betriebszustand und einem zweiten Betriebszustand kann es einem Sende-Empfangsgerät ermöglichen, dass das Sende-Empfangsgerät unterschiedliche Rollen in einer Messwertübertragungsanordnung einnehmen kann, ohne unterschiedliche Geräte einsetzen zu müssen. Das bedeutet, dass basierend auf der selben Hardware-Plattform mit nur einem Gerätetyp die drahtlose Übertragung von Messwerten realisiert werden kann. Der Betriebszustand, den das Sende-Empfangsgerät einnimmt, kann vorgebbar sein. Der gewünschte Betriebszustand kann aber beispielsweise auch anhand eines an dem Sende-Empfangsgerät angeschlossenen Feldgerät oder einem angeschlossenen Auswertegerät erkannt werden. Dazu kann das Sende-Empfangsgerät eine Erkennungseinrichtung aufweisen, die es erlaubt den Typ eines angeschlossenen Gerätes zu erkennen. Die Erkennung kann durch den Austausch eines entsprechenden Signals mit einer Kodierung erfolgen.

Dementsprechend kann ein Sende-Empfangsgerät flexibel eingesetzt werden. Zumeist kann eine Flussrichtung für Messwerte bei der Messwertübertragung angegeben werden. Der Fluss eines Messwertes oder eines Feldgerätesignals kann in der Richtung von dem Feldgerät zu einem Auswertegerät erfolgen. Ein Auswertegerät kann dabei eine Einrichtung sein, die ausgebildet ist, ein Feldgerät zu steuern und empfangene Messwerte weiterzuverarbeiten oder auszugeben.

Bei einer Messung kann das Auswertegerät das Feldgerät steuern. Trotz dem auf den Messwert bezogenen Signalfluss vom Feldgerät zum Auswertegerät, kann zwischen dem Auswertegerät und dem Feldgerät jedoch ein bidirektionaler Datenaustausch erfolgen, um beispielsweise das Feldgerät zu einer Messung anzuregen und einen Messwert zu empfangen. Über diesen bidirektionalen Datenaustausch kann auch eine Kommunikation mittels Kommandos und Antworten auf Kommandos erfolgen.

Erfolgt die Kommunikation zwischen dem Feldgerät und dem Auswertegerät drahtlos, so kann es nötig sein, eine Feldgeräteschnittstelle und insbesondere Feldgerätesignale in Funksignale für die Übertragung mittels einer Funkschnittstelle zu wandeln. Da, bezogen auf die Messwertübertragungsrichtung, ein Senden der Messwerte von einem Feldgerät in Richtung eines Auswertegeräts stattfinden kann, kann es zur drahtlosen Übertragung nötig sein, zwischen einem feldgerätseitigen Sende-Empfangsgerät und einem auswertegerätseitigen Sende-Empfangsgerät zu unterscheiden.

Bezogen auf den Messwertaustausch mag das feldgerätseitige Sende-Empfangsgerät die drahtlose Sendeeinrichtung und das auswertegerätseitige Sende-Empfangsgerät die drahtlose Empfangseinrichtung bezeichnen. Das feldgerätseitige Sende-Empfangsgerät kann dabei mit dem Feldgerät verbunden sein und zur Steuerung des Feldgeräts kann die Sendeeinrichtung feldgerätespezifische Funktionen bereitstellen. Hierbei sollen unter feldgerätspezifischen Funktionen Funktionen verstanden werden, die das Feldgerät steuern. Beispielsweise sind das Funktionen, die ein Feldgerät anweisen, einen Messwert zu erzeugen, aber auch Funktionen, die den von dem Feldgerät ermittelten Messwert aufnehmen.

Auf der Empfangsseite, also in dem auswertegerätseitigen Sende-Empfangsgerät können andere, nämlich auswertegerätspezifische Funktionen ausgeführt werden. Unter den auswertegerätspezifischen Funktionen können hier beispielsweise Funktionen verstanden werden, die der Bereitstellung eines Messwerts dienen.

In anderen Worten bedeutet das, dass eine drahtlose Sendeeinrichtung ausgebildet ist, Sensoren zu steuern und Messwerte aufzunehmen und diese Messwerte oder Feldgerätesignale an die Übertragung über die Luftschnittstelle anzupassen. Die drahtlose Empfangseinrichtung kann hingegen ausgestaltet sein, ein Funksignal zu empfangen und ein in dem Funksignal eingepacktes Feldgerätesignal auszupacken und dieses wiederum einem Auswertegerät zur Verfügung stellen.

Ein Feldgerät kann auch ein Aktor sein, der von einem Auswertegerät ein Signal empfängt, wobei bei einem Aktor der Signalfluss in einer der Flussrichtung bei der Messwertaufnahme entgegengesetzte Richtung erfolgt. Folglich kann im Falle der Steuerung eines Aktors der Signalfluss von einem Auswertegerät zu dem Feldgerät oder Aktor stattfinden.

Sowohl im Fall der Messwertaufnahme als auch der Steuerung eines Aktors kann jedoch zwischen dem feldgerätseitigen Sende-Empfangsgerät und dem auswertegerätseitigen Sende-Empfangsgerät eine bidirektionale Kommunikation bezüglich dem Austausch von Steuerkommandos stattfinden.

Zur Funkübertragung können Funkprotokolle, wie beispielsweise WLAN (Wireless LAN), Bluetooth oder Zigbee eingesetzt werden. Das Sende-Empfangsgerät kann dabei als Gateway zur Umwandlung der Feldgeräteschnittstelle in die Funkschnittstelle verstanden werden. Ob das Sende-Empfangsgerät auswertegerätseitig eingesetzt wird oder ob das Sende-Empfangs-gerät feldgerätseitig eingesetzt wird, kann über die Wahl des Betriebszustandes festgelegt werden. Daher kann mit derselben Hardwareplattform eine unterschiedliche Funktionalität bei Anschluss an das Feldgerät oder bei Anschluss an das Auswertegerät bereitgestellt werden. Alternativ kann das Sende-Empfangsgerät auch als eine drahtlose Anzeigeeinrichtung eingesetzt werden. Eine drahtlose Anzeigeeinrichtung kann ein drahtloses Empfangsgerät mit einer Anzeige-/Bedieneinrichtung sein.

Gemäß einem anderen exemplarischen Ausführungsbeispiel der vorliegenden Erfindung wird ein Sende-Empfangsgerät angegeben, wobei das Feldgerätesignal der Feldgeräteschnittstelle des Sende-Empfangsgeräts ein Feldbussignal ist. Das Feldgerätesignal kann dabei aus der Gruppe der Feldbussignale umfassend ein HART^{®}-Signal, ein Profibus-Signal, ein Fieldbus Foundation-Signal, ein 4...20mA-Signal, ein I²C-Signal und ein Schaltsignal sein.

I²C, I2C oder IIC (für Integrated Circuit) ist ein serieller Bus für Computersysteme. Er kann benutzt werden, um Geräte mit geringer Übertragungsgeschwindigkeit an einem Embedded System oder eine Hauptplatine anzuschließen.

Das HART^{®} Protokoll (Highway Adressible Remote Transmitter) kann insbesondere als ein offenes Master Slave Protokoll für busadressierbare Feldgeräte bezeichnet werden. Es kann eine Methode implementieren, Daten mittels Frequency Shift Keying (FSK), aufgesetzt auf dem 4 bis 20 mA-Prozesssignal, zu übertragen, um Fernkonfiguration und Diagnoseüberprüfungen zu ermöglichen. Eine HART^{®}-Schnittstelle des HART^{®}-Protokolls kann sowohl als Zweidraht-Bus mit integrierter Spannungsversorgung (aktiv) oder Vierdraht-Bus mit separater Spannungsversorgung (passiv) ausgebildet sein. Bei einem HART^{®}-Signal das dem HART^{®}-Protokoll entspricht handelt es sich um ein digitales Signal zur Übertragung von Messwerten. Das digitale HART^{®}-Signal ist auf ein 4...20 mA Signal aufmoduliert. Folglich lässt sich das digitale Signal parallel zu dem analogen 4...20 mA Signal übertragen. Findet eine solche parallele Übertragung von analogen und digitalen Signalen statt, kann an einem HART^{®}-Bus nur ein Feldgerät angeschlossen sein.

Andererseits können in einem so genannten Multi-Drop-Modus bis zu 15 digitale Feldgeräte an einem HART^{®}-Bus angeschlossen sein. Der analoge Strom ist dabei im Wesentlichen auf 4 mA eingestellt. Die Feldgeräte tauschen im Multi-Drop-Modus ein digital kodiertes Signal aus. Bei dem digitalen Signal handelt es sich um ein frequenzmoduliertes Signal, wobei das frequenzmodulierte Signal die beiden Frequenzen 1200 Hz und 2200 Hz einnehmen kann.

Sowohl I2C als auch HART^{®} eignen sich als Protokoll zur Kommunikation mit einem Feldgerät, z. B. mit einem Füllstandmessgerät oder mit einem Druckmessgerät.

Feldgeräte im Sinne dieser Anmeldung können jede Art von Messgeräten sein, beispielsweise Füllstandmessgeräte, Druckmessgeräte, Grenzstanderfassungsmessvorrichtungen oder Temperaturmessvorrichtungen, um nur einige Beispiele zu nennen. Zur Erfassung können dabei unterschiedliche physikalische Effekte ausgenutzt werden. Die Messwerterfassung kann mit Hilfe von Radarstrahlen, Ultraschall, Vibration, geführter Mikrowelle (TDR, Time Domain Reflexion) oder kapazitiven Effekte erfolgen.

Durch die variable Bereitstellung unterschiedlicher Feldgerätesignalschnittstellen kann es ermöglicht werden, mit unterschiedlichen Auswertegeräten bzw. unterschiedlichen Feldgeräten oder Anzeigeeinrichtungen zusammenzuarbeiten. Ein Auswertegerät oder ein Feldgerät kann dabei an die Feldgeräteschnittstelle des Sende-Empfangsgeräts angeschlossen werden. Die Feldbussignale, die an den Feldgeräteschnittstellen bereitgestellt werden, können in dem Sende-Empfangsgerät in Funksignale gewandelt werden und so über die Luft, also drahtlos, übertragen werden.

Es kann durch die drahtlose Übertragung mittels eines auswertegerätseitigen und eines feldgerätseitigen Sende-Empfangsgeräts ermöglicht werden, eine Verbindung, die drahtgebunden über einen Feldbus erfolgt, aufzutrennen und somit die drahtgebundene Übertragung durch eine drahtlose Übertragung zu ersetzen.

Gemäß noch einem anderen exemplarischen Ausführungsbeispiel der vorliegenden Erfindung ist die Feldgeräteschnittstelle als eine interne Schnittstelle ausgebildet. Beispielsweise kann bei einem Anzeigegerät eine Funktion zur Ermittlung der Anzeigewerte in dem Sende-Empfangsgerät durchgerührt werden. Dabei kann der ermittelte anzuzeigende Wert über die interne Feldgeräteschnittstelle im Sende-Empfangsgerät an eine in dem Sende-Empfangsgerät integrierte Anzeige-/Bedieneinrichtung bereitgestellt werden. So kann es auch möglich sein, über eine I²C-Schnittstelle einen über Funk empfangenen Messwert an dem Sende-Empfangsgerät anzuzeigen. Die Verwendung als Anzeigegerät kann ein weiterer einstellbarer Betriebszustand eines Sende-Empfangsgerätes sein.

Gemäß noch einem weiteren exemplarischen Ausführungsbeispiel der vorliegenden Erfindung wird ein Sende-Empfangsgerät geschaffen, bei dem die Funkschnittstelle als eine Antenne ausgebildet ist. Die Antenne weist eine vorgebbare Antennencharakteristik auf.

Mittels einer vorgebbaren Antennencharakteristik lässt sich das Übertragungsverhalten einer Funkschnittstelle anpassen. Eine vorgebbare Antennencharakteristik kann beispielsweise mittels eines Antennenarrays erfolgen, wobei die Antennencharakteristik elektronisch gesteuert werden kann. Es kann somit beispielsweise gezielt in eine bestimmte Richtung gestrahlt werden. Dadurch kann die Reichweite eines Funksignals erhöht werden. Mittels einer vorgebbaren Antennencharakteristik kann es auch ermöglicht werden, sog. Funkzellen zu schaffen, das bedeutet, dass Bereiche, in denen unterschiedliche Funkfrequenzen verwendet werden, voneinander getrennt werden können. Dadurch kann erreicht werden, dass kleine Zellen geschaffen werden, und somit auf eine Gesamtfläche bezogen mehr Bandbreite zur Verfügung gestellt werden kann.

Ferner wird gemäß noch einem anderen Ausführungsbeispiel der vorliegenden Erfindung ein Sende-Empfangsgerät geschaffen, bei dem die Funkschnittstelle eine Leistungsbegrenzungseinrichtung aufweist.

Die Funkschnittstelle kann mittels eines Funkmoduls realisiert sein. Aufgrund gesetzlicher Vorgaben kann es nötig sein, die Sendeleistung eines Funkmoduls zu reduzieren. Außerdem kann es nötig sein, die Sendeleistung einer Funkschnittstelle zu reduzieren, um Überreichweiten und Interferenzen zwischen verschiedenen Funkmodulen vermeiden zu können. Die Leistungsbegrenzung kann dabei vorgebbar sein. Mittels einer vorgebbaren Leistungsbegrenzung kann die Sendeleistung eines Sende-Empfangsgeräts eingestellt werden, ohne eine unterschiedliche Hardware einzusetzen.

Gemäß noch einem weiteren exemplarischen Ausführungsbeispiel der vorliegenden Erfindung wird ein Sende-Empfangsgerät bereitgestellt, wobei die Funkschnittstelle ausgebildet ist, mit einer vorgebbaren Frequenz von 900 MHz oder 2,4 GHz zu arbeiten. Durch die vorgebbare Frequenz kann zwischen unterschiedlichen Frequenzen umgeschaltet werden. Dadurch kann das Sende-Empfangsgerät auch flexibel an einzuhaltende gesetzliche Vorgaben angepasst werden. Funkübertragungstechnologien, wie WLAN oder Bluetooth, nutzen beispielsweise das sog. ISM (industrial, scientific and medical Band) Band zur Übertragung von Daten. Das ISM Band kann lizenzfrei für industrielle, wissenschaftliche oder medizinische Anwendungen genutzt werden. Das 2,4 GHz Band ist dabei weltweit für industrielle, wissenschaftliche oder medizinische Anwendungen freigegeben.

Dieses ISM-Band können aber auch z. B. schnurlose Telefone oder Babyfons verwenden. Es kann zwar Auflagen bezüglich der einzuhaltenden Sendeleistung und der Störung benachbarter Frequenzen geben, jedoch kann es innerhalb des freien ISM Bandes zu Übertragungsstörungen der vielen in diesem Band operierenden Geräten kommen. Diese Störungen können es unter Umständen nötig machen, übertragene Information zu wiederholen. Somit kann es bei der Übertragung zu Verzögerungen kommen.

Gemäß einem weiteren exemplarischen Ausführungsbeispiel der vorliegenden Erfindung ist das Sende-Empfangsgerät mittels einer abnehmbaren Bedieneinrichtung oder Anzeigeeinrichtung parametrierbar.

Die Anzeige-/Bedieneinrichtung kann ein Mensch-Maschine-Interface für das Sende-Empfangsgerät bereitstellen. Über die Anzeige-/Bedieneinrichtung kann ein Nutzer das Sende-Empfangsgerät parametrieren oder sich empfangene Werte anzeigen lassen. Über die Anzeige-/Bedieneinrichtung kann beispielsweise auch zwischen den Betriebszuständen des Sende-Empfangsgeräts umgeschaltet werden.

Gemäß noch einem anderen exemplarischen Ausführungsbeispiel der vorliegenden Erfindung wird ein Sende-Empfangsgerät geschaffen, wobei das Sende-Empfangsgerät zwischen einer Masterfunktion und einer Slavefunktion umschaltbar ist.

Eine Masterfunktion kann über die Feldgeräteschnittstelle ein an der Feldgeräteschnittstelle angeschlossenes Feldgerät anweisen, Messwerte bereitzustellen. Eine als Master eingerichtete drahtlose Sendeeinrichtung bzw. ein feldgerätseitiges Sende-Empfangsgerät kann folglich einen angeschlossenen Sensor oder ein angeschlossenes Feldgerät anweisen, mit einer Messung zu beginnen und einen Messwert bereitzustellen.

Nimmt hingegen ein Sende-Empfangsgerät eine Slavefunktion ein, so kann das Sende-Empfangsgerät über die Feldgeräteschnittstelle ein an die Feldgeräteschnittstelle angeschlossenes Auswertegerät steuern. Somit kann ein Sende-Empfangsgerät die Anweisung bekommen, ein Feldgerät abzufragen. Durch die Einnahme einer Slavefunktion kann ein Sende-Empfangsgerät gegenüber einem Auswertegerät einen transparenten Feldbus simulieren. In anderen Worten bedeutet das, dass das Sende-Empfangsgerät als Empfangseinrichtung oder auswertegerätseitiges Sende-Empfangsgerät einem Auswertegerät vormachen kann, das Sende-Empfangsgerät sei ein Feldgerät.

Eine Anfrage eines Auswertegeräts an ein auswertegerätseitiges Sende-Empfangsgerät kann in dem Sende-Empfangsgerät eine Funktion auslösen, die das Sende-Empfangsgerät zur Abfrage eines entfernten Feldgeräts bringt. Als Ergebnis dieser Abfrage liefert das Sende-Empfangsgerät dem Auswertegerät einen Messwert zurück.

Da es aufgrund der Funkübertragung, welche zwischen dem Sende-Empfangsgerät und dem Feldgerät erfolgt, zu Verzögerungen kommen kann, kann zwischen dem Auswertegerät und dem Sende-Empfangsgerät ein an diese Verzögerung angepasstes proprietäres Feldgeräteprotokoll eingesetzt werden.

Gemäß noch einem anderen exemplarischen Ausführungsbeispiel der vorliegenden Erfindung wird ein Sende-Empfangsgerät angegeben, wobei das Sende-Empfangsgerät ein abgesetztes Schnittstellengerät aufweist, welches eine Vielzahl von Feldgeräteschnittstellen aufweist. Das abgesetzte Schnittstellengerät kann mittels einer der Vielzahl von Feldgeräteschnittstellen des abgesetzten Schnittstellengeräts an das Sende-Empfangsgerät gekoppelt werden. Mindestens eine der Vielzahl der Feldgeräteschnittstellen des abgesetzten Schnittstellengeräts ist ausgebildet ein Feldgerätesignal eines entfernten Feldgeräts bereitzustellen.

Sende-Empfangsgeräte, die an Feldgeräte angeschlossen sind, können die Feldgerätesignale über die Funkschnittstelle bereitstellen. Dabei können beispielsweise mehrere Feldgeräte mit einem Sende-Empfangsgerät, das entsprechend viele Feldgeräteschnittstellen aufweist, verbunden sein oder es können auch mehrere Sende-Empfangsgeräte im Feld mit einem auswertegerätseitigen Sende-Empfangsgerät kommunizieren. Das auswertegerätseitige Sende-Empfangsgerät kann die Signale der Feldgeräte an das abgesetzte Schnittstellengerät über nur eine einzige Schnittstelle weiterleiten. Das abgesetzte Schnittstellengerät kann die Signale der mehreren Feldgeräte an jeweils einer der Vielzahl an Feldgeräteschnittstellen bereitstellen. Damit lassen sich an einem einzigen Sende-Empfangsgerät die Signale von mehreren Feldgeräten bereitstellen, wodurch wenige Sende-Empfangsgeräte eingesetzt werden müssen um mehrere Feldgeräte abfragen zu können.

Gemäß noch einem anderen exemplarischen Ausführungsbeispiel der vorliegenden Erfindung wird ein Sende-Empfangsgerät mit einem modularen Gehäuse angegeben, wobei das modulare Gehäuse ein Kopfgehäusemodul und ein Sockelgehäusemodul aufweist. Das Sockelgehäusemodul ist ausgebildet, eine Feldgeräteschnittstelle bereitzustellen, und das Sockelgehäusemodul ist mit dem Kopfgehäusemodul koppelbar.

Wegen der Koppelbarkeit zwischen dem Kopfgehäusemodul und dem Sockelgehäusemodul kann beispielsweise eine für mehrere Sende-Empfangsgeräte gleiche Funktion in dem Kopfgehäusemodul untergebracht werden, wohingegen über das koppelbare Sockelgehäusemodul verschiedene Feldgeräteschnittstellen für unterschiedliche Einsatzfälle bereitgestellt werden können. Die Sende-Empfangsgeräte können dadurch einfach gefertigt werden. Darüberhinaus kann ein Sende-Empfangsgerät erweitert werden und außerdem kann ein Nachrüsten mit verschiedenen Feldgeräteschnittstellen ermöglicht werden.

Somit sind unter Beibehaltung einer Grundfunktionalität die Feldgeräteschnittstellen auswechselbar und es können folglich bei Bedarf über ein einziges Sockelgehäusemodul mehrere Feldgeräteschnittstellen bereitgestellt werden. Andererseits kann es aber auch erwünscht sein, nur eine einzige Feldgeräteschnittstelle für ein einziges Feldgerät bereitzustellen.

Die Grundfunktion, nämlich das Abfragen der einen oder der mehreren Feldgeräteschnittstellen und das Wandeln in ein Funkprotokoll, kann dabei für alle Sende-Empfangsgeräte, unabhängig von der Anzahl der zu bedienenden Schnittstellen, gleich sein.

Mittels einem abnehmbaren und auswechselbaren Sockelgehäusemodul kann aber auch an einem Kopfgehäusemodul eine Bodenplatte angebracht werden, die zwar keine Schnittstelle bereitstellt, die jedoch der Befestigung des Sende-Empfangsgeräts dient. Die Verwendung einer Bodenplatte als Sockelgehäusemodul kann bei der Verwendung des Sende-Empfangsgeräts als Anzeigeeinrichtung erwünscht sein.

Gemäß noch einem anderen exemplarischen Ausführungsbeispiel der vorliegenden Erfindung wird ein Sende-Empfangsgerät geschaffen, wobei die von dem Sockelgehäusemodul bereitgestellte Schnittstelle als Anschluss für ein Zweileiter-Feldgerät ausgebildet ist. Ein Anschluss für ein Zweileiter-Feldgerät kann beispielsweise zwei Klemmen zum Anschluss einer Zweidrahtverbindung aufweisen. Ein Zweileiter-Feldgerät kann über diesen Zweileiter-Anschluss mit Strom versorgt werden.

Die Ausprägung als Zweileiter-Anschluss mag eine beispielhafte physikalische Ausprägung der Feldgeräteschnittstelle darstellen. Signale, die über diese Schnittstelle übertragen werden, können sich zwar physikalisch von anders ausgestalteten physikalische Feldgeräteschnittstellen unterscheiden, jedoch inhaltlich können sich die über die Feldgeräteschnittstellen übertragenen Signale entsprechen. Dadurch kann in dem Sockelgehäusemodul eine Anpassung an die physikalischen Gegebenheiten einer Feldgeräteschnittstelle erfolgen, wohingegen beispielsweise in dem Kopfgehäusemodul untergebrachte Grundfunktion für sämtliche unterschiedliche physikalische Ausprägungen der Feldgeräteschnittstellen gleich sein kann. Bezogen auf ein für die Darstellung von Protokollen entwickeltes Schichtenmodell, können in dem Sockelgehäusemodul Funktionen der physikalischen Anpassungsschicht untergebracht sein.

Gemäß noch einem anderen exemplarischen Ausführungsbeispiel der vorliegenden Erfindung kann die von dem Sockelgehäusemodul bereitgestellte Schnittstelle als Anschluss für ein Vierleiter-Feldgerät ausgebildet sein. Ein Vierleiter-Anschluss kann vier Anschlussklemmen aufweisen, wobei eine getrennte Übertragung von Feldgerätesignalen und Stromversorgungssignalen ermöglicht wird. Für die Stromversorgung können zwei Anschlussklemmen vorgesehen sein und für die Kommunikation, d.h. für die Datenübertragung, können zwei weitere Anschlussklemmen der vier Anschlussklemmen vorgesehen sein.

Allerdings kann ein Sende-Empfangsgerät auch für den Anschluss eines Vierleiter-Geräts an dem Sende-Empfangsgerät nur zwei Anschlussklemmen aufweisen, da das Vierleiter-Gerät über eine externe Strom- oder Spannungsversorgung mit Energie versorgt werden kann. Im Vergleich zu den ebenfalls zwei Anschlussklemmen eines Zweileitersystems, können sich die beiden Anschlussklemmen des Vierleiter-Gerätes darin unterscheiden, dass über die Anschlussklemmen des Vierleiter-Gerätes keine Energieversorgung erfolgt.

Gemäß noch einem anderen exemplarischen Ausführungsbeispiel der vorliegenden Erfindung wird ein Sende-Empfangsgerät geschaffen, bei dem das Sockelgehäusemodul eine Schnittstelle für den Anschluss eines digitalen Schalters bereitstellt.

Eine Schnittstelle für einen Schalter kann beispielsweise einen Optokoppler umfassen, wodurch eine galvanische Trennung eines Schalteingangs hergestellt werden kann. Das Schaltsignal kann in dem Sende-Empfangsgerät, insbesondere in einer in dem Sockelgehäusemodul untergebrachten Schaltung, in ein Funksignal gewandelt werden und dann über die Luftschnittstelle übertragen werden. An dem Auswertegerät, insbesondere an dem abgesetzten Schnittstellengerät, kann der Zustand eines angeschlossenen Schalters abgefragt werden, indem das Funksignal empfangen und ausgewertet wird.

Gemäß einem weiteren exemplarischen Ausführungsbeispiel der vorliegenden Erfindung wird ein Sende-Empfangsgerät mit einem Sockelgehäusemodul geschaffen, wobei das Sockelgehäusemodul ausgebildet ist, eine Schnittstelle für den Anschluss eines 4...20mA Geräts bereitzustellen. Bei einem 4...20mA Gerät kann es sich um ein Messgerät handeln, das einen analogen Messwert bereitstellt. Mittels des 4...20mA Geräteanschluss kann auch ein analoger Messwert oder ein Prozentwert drahtlos übertragen werden.

Gemäß noch einem weiteren exemplarischen Ausführungsbeispiel der vorliegenden Erfindung wird ein Sende-Empfangsgerät mit einem Sockelgehäusemodul bereitgestellt, wobei das Sockelgehäusemodul ausgebildet ist, den Betriebszustand des Sende-Empfangsgeräts zu bestimmen und einzustellen.

In dem Sockelgehäusemodul kann beispielsweise eine Kodierung zur Kennzeichnung des Sockelgehäusemoduls vorgesehen sein, die von dem Sende-Empfangsgerät bei einer Kopplung mit dem Gehäusekopfmodul abgefragt werden kann. Es kann automatisch die Art der von dem Sockelgehäusemodul bereitgestellten Schnittstelle von dem Sende-Empfangsgerät erkannt werden. Somit kann sich das Sende-Empfangsgerät an die von dem Sockelgehäusemodul bereitgestellte Schnittstelle anpassen und das Sende-Empfangsgerät kann seinen Betriebszustand dementsprechend einstellen.

Folglich kann auch mittels des Sockelgehäusemoduls festgelegt werden, ob das Sende-Empfangsgerät gerade als drahtlose Sendeeinrichtung, also als feldgerätseitiges Sende-Empfangsgerät, oder als drahtlose Empfangseinrichtung, also als auswertegerätseitiges Sende-Empfangsgerät, eingesetzt wird. Neben der automatischen Umschaltung kann die Umschaltung des Betriebszustandes auch manuell, durch eine entsprechende Konfiguration des Sende-Empfangsgeräts, erfolgen.

Gemäß noch einem weiteren exemplarischen Ausführungsbeispiel der vorliegenden Erfindung wird ein Sende-Empfangsgerät geschaffen, wobei das Sockelgehäusemodul ausgebildet ist, in Abhängigkeit von der bereitgestellten Schnittstelle einen Typ des Sende-Empfangsgeräts zu bestimmen.

Der Typ des Sende-Empfangsgerät kann zwischen einer drahtloser Empfangseinrichtung, einer drahtlosen Sendeeinrichtung oder einer Anzeigeeinrichtung eingestellt werden. Das Sende-Empfangsgerät kann auch die Anzahl der angeschlossenen Feldgeräte erkennen und darüber hinaus die Art der angeschlossenen Feldgeräte. Es kann also festgestellt werden, ob beispielsweise ein HART^{®} Feldgerät, ein 4...20mA Feldgerät oder ein Schalter an der Sende-Empfangseinrichtung angeschlossen ist. Dadurch kann sich das Sende-Empfangsgerät an die jeweils bereitgestellten Schnittstellen und die Funktion oder den Typ, den das Sende-Empfangsgerät einnehmen soll, anpassen.

Gemäß einem weiteren exemplarischen Ausführungsbeispiel der vorliegenden Erfindung wird ein Sende-Empfangsgerät angegeben, dessen modulares Kopfgehäusemodul eine Antenne aufweist. Über die Antenne, die extern oder intern an dem Kopfgehäusemodul angeordnet sein kann, kann die Funkübertragung erfolgen. Gemäß einem weiteren exemplarischen Ausführungsbeispiel der vorliegenden Erfindung kann die Antenne an das Kopfgehäusemodul schraubbar befestigbar sein. Dadurch kann die Antenne leicht installiert oder deinstalliert werden.

Gemäß noch einem anderen exemplarischen Ausführungsbeispiel der vorliegenden Erfindung ist die Antenne mittels einer M20x1,5 oder einer ½"NPT (National Pipe Thread) Verschraubung an dem Kopfgehäusemodul anschraubbar.

Gemäß noch einem anderen exemplarischen Ausführungsbeispiel der vorliegenden Erfindung wird ein Sende-Empfangsgerät angegeben, wobei die Feldgeräteschnittstelle zum Anschluss eines Conduits ausgebildet ist.

Bei einem Conduit handelt es sich um eine meist metallische Ummantelung einer Drahtverbindung. Durch einen Conduit kann ein Bus vor mechanischen Einflüssen geschützt werden.

Gemäß noch einem anderen exemplarischen Ausführungsbeispiel der vorliegenden Erfindung weist das Sende-Empfangsgerät eine Energieversorgung auf, wobei die Energieversorgung ausgebildet ist, ein über die Feldgeräteschnittstelle angeschlossenes Feldgerät mit Energie zu versorgen.

Mittels einer Energieversorgung in dem Sende-Empfangsgerät, mit der ein Feldgerät, beispielsweise ein Zweileiter-Feldgerät, mit Energie versorgt werden kann, kann ein autarker Einsatz eines Sende-Empfangsgeräts mit einem Feldgerät erfolgen. Folglich kann auf eine eigene Energieversorgung in dem Feldgerät verzichtet werden. Die Energieversorgung kann beispielsweise über eine Fotozelle in dem Sende-Empfangsgerät oder eine andere regenerative Energiequelle erfolgen.

Andererseits kann in dem Sende-Empfangsgerät ein Netzteil zur Umwandlung und zur Energieversorgung des Feldgeräts oder Sensors vorhanden sein. Die von dieser Energieversorgung erzeugte Energie oder Leistung kann über den Zweileiter-Anschluss zusammen mit Nutzsignalen übertragen werden. Bei einem Vierleitersystem wird diese Energie über separate Leitungen, getrennt von den Nutzsignalen, übertragen.

Zuvor wurden viele Ausbildungen der Erfindung bezugnehmend auf das Sende-Empfangsgerät beschrieben. Diese Ausgestaltungen gelten in entsprechender Weise auch für die drahtlose Messwertübertragungsanordnung und das Verfahren zur drahtlosen Übertragung von Feldsignalen.

Im Folgenden werden weitere exemplarische Ausführungsbeispiele der vorliegenden Erfindung im Hinblick auf die drahtlose Messwertübertragungsanordnung und das Verfahren zur drahtlosen Übertragung von Feldgerätesignalen beschrieben. Diese Ausgestaltungen gelten auch für das Sende-Empfangsgerät.

Gemäß einem weiteren exemplarischen Ausführungsbeispiel der vorliegenden Erfindung wird eine drahtlose Messwertübertragungsanordnung angegeben, die ferner ein drittes Sende-Empfangsgerät, welches wie oben beschrieben ist, ausgestaltet ist, aufweist und wobei die Messwertanordnung ein abgesetztes Schnittstellengerät mit einer Vielzahl von Feldgeräteschnittstellen aufweist. Dabei befindet sich das dritte Sende-Empfangsgerät in dem ersten Betriebszustand und das abgesetzte Schnittstellengerät ist mittels einer ersten Feldgeräteschnittstelle der Vielzahl von Feldgeräteschnittstellen an das zweite Sende-Empfangsgerät koppelbar.

Eine zweite Feldgeräteschnittstelle des abgesetzten Schnittstellengeräts ist dabei ausgebildet, einen über die mit dem zweiten Sende-Empfangsgerät gekoppelte Feldgeräteschnittstelle des ersten Sende-Empfangsgeräts aufgenommenen Messwert bereitzustellen. Eine dritte Feldgeräteschnittstelle des abgesetzten Schnittstellengeräts ist dabei ausgebildet, einen an der Feldgeräteschnittstelle des dritten Sende-Empfangsgeräts aufgenommenen Messwert bereitzustellen.

Es lassen sich daher die Messwerte, welche an örtlich getrennten Messgeräten aufgenommen werden an einem einzigen abgesetzten Schnittstellengerät bereitstellen. Obwohl die Messgeräte an dem ersten Sende-Empfangsgerät als auch an dem dritten Sende-Empfangsgerät angeschlossen sind, lassen sich die Messgeräte an einem abgesetzten Schnittstellengerät bereitstellen. Dabei kann die Bereitstellung der Messwerte jedoch wieder an getrennten Feldgeräteschnittstellen des abgesetzten Schnittstellengeräts erfolgen.

Die Kommunikation des abgesetzten Schnittstellengeräts mit dem zweiten Sende-Empfangsgerät kann auch über eine proprietäre Feldgeräteschnittstellen des abgesetzten Schnittstellengeräts erfolgen. Folglich kann das abgesetzte Schnittstellengerät an den Feldgeräteschnittstellen ein Standardfeldgeräteprotokoll bereitstellen, wohingegen das abgesetzte Schnittstellengerät zur Kommunikation mit dem Sende-Empfangsgerät ein proprietäres Feldgeräteschnittstellenprotokoll einsetzen kann.

### Kurze Beschreibung der Zeichnungen

Im Folgenden werden vorteilhafte Ausführungsbeispiele der vorliegenden Erfindung mit Verweis auf die Figuren beschrieben.
Fig. 1 zeigt eine drahtgebundene Messwertübertragungsanordnung gemäß einem exemplarischen Ausführungsbeispiel der vorliegenden Erfindung.
Fig. 2 zeigt eine drahtlose Messwertübertragungsanordnung gemäß einem exemplarischen Ausführungsbeispiel der vorliegenden Erfindung.
Fig. 3 zeigt eine drahtlose Messwertübertragungsanordnung mit einem Auswertegerät gemäß einem exemplarischen Ausführungsbeispiel der vorliegenden Erfindung.
Fig. 4 zeigt eine drahtlose Messwertübertragungsanordnung mit einer Anzeigeeinrichtung gemäß einem exemplarischen Ausführungsbeispiel der vorliegenden Erfindung.
Fig. 5 zeigt zwei parallel betriebene drahtlose Messwertübertragungsanordnungen gemäß einem exemplarischen Ausführungsbeispiel der vorliegenden Erfindung.
Fig. 6 zeigt eine drahtlose Messwertübertragungsanordnung mit mehreren Teilnehmern gemäß einem exemplarischen Ausführungsbeispiel der vorliegenden Erfindung.
Fig. 7 zeigt ein Sende-Empfangsgerät in einem Kunststoffgehäuse gemäß einem exemplarischen Ausführungsbeispiel der vorliegenden Erfindung.
Fig. 8 zeigt ein Sende-Empfangsgerät mit einer Anzeige-/Bedieneinrichtung in einem Kunststoffgehäuse gemäß einem exemplarischen Ausführungsbeispiel der vorliegenden Erfindung.
Fig. 9 zeigt ein Sende-Empfangsgerät mit Bodenplatte in einem Kunststoffgehäuse gemäß einem exemplarischen Ausführungsbeispiel der vorliegenden Erfindung.
Fig. 10 zeigt ein Sende-Empfangsgerät in einem Aluminiumgehäuse gemäß einem exemplarischen Ausführungsbeispiel der vorliegenden Erfindung.
Fig. 11 zeigt ein Sende-Empfangsgerät mit einer Anzeige-/Bedieneinrichtung in einem Aluminiumgehäuse gemäß einem exemplarischen Ausführungsbeispiel der vorliegenden Erfindung.
Fig. 12 zeigt ein Sende-Empfangsgerät mit Bodenplatte in einem Aluminiumgehäuse gemäß einem exemplarischen Ausführungsbeispiel der vorliegenden Erfindung.
Fig. 13 zeigt ein Sockelgehäusemodul mit einem Anschluss für ein Zweileiter-Feldgerät gemäß einem exemplarischen Ausführungsbeispiel der vorliegenden Erfindung.
Fig. 14 zeigt ein Sockelgehäusemodul mit mehreren Anschlüssen für Feldgeräte gemäß einem exemplarischen Ausführungsbeispiel der vorliegenden Erfindung.
Fig. 15 zeigt eine Anordnung zum Parametrieren eines Sende-Empfangsgeräts gemäß einem exemplarischen Ausführungsbeispiel der vorliegenden Erfindung.
Fig. 16 zeigt ein Übersichts-Blockdiagramm eines Sende-Empfangsgeräts gemäß einem exemplarischen Ausführungsbeispiel der vorliegenden Erfindung.
Fig. 17 zeigt ein Blockdiagramm eines Sende-Empfangsgeräts gemäß einem exemplarischen Ausführungsbeispiel der vorliegenden Erfindung.
Fig. 18 zeigt eine perspektivische Darstellung einer Antenne gemäß einem exemplarischen Ausführungsbeispiel der vorliegenden Erfindung.
Fig. 19 zeigt eine Seitenansicht eines Befestigungselements für eine Antenne gemäß einem exemplarischen Ausführungsbeispiel der vorliegenden Erfindung.
Fig. 20 zeigt eine Schnittansicht eines Befestigungselements für eine Antenne gemäß einem exemplarischen Ausführungsbeispiel der vorliegenden Erfindung.
Fig. 21 zeigt ein Nachrichtenformat eines proprietären Übertragungsprotokolls gemäß einem exemplarischen Ausführungsbeispiel der vorliegenden Erfindung.
Fig. 22 zeigt ein Sende-Empfangsgerät, das in eine analoge Busverbindung eingeschleift ist, gemäß einem exemplarischen Ausführungsbeispiel der vorliegenden Erfindung.

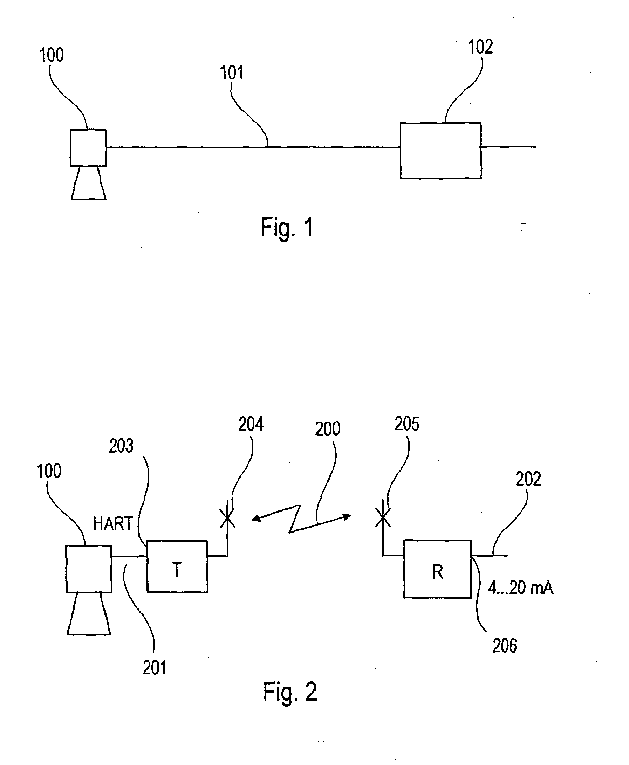

Die Darstellungen in den Figuren sind schematisch und nicht maßstäblich. In der folgenden Beschreibung der Fig. 1 bis Fig. 21 werden die gleichen Bezugsziffern für gleiche oder sich entsprechende Elemente verwendet.

### Detaillierte Beschreibung von exemplarischen Ausführungsformen

Fig. 1 zeigt eine drahtgebundene Messwertübertragungsanordnung gemäß einem exemplarischen Ausführungsbeispiel der vorliegenden Erfindung. Dabei ist das Feldgerät 100, Messgerät 100, Sensor 100 oder Aktor 100 über den Bus 101, insbesondere über den Feldbus 101, mit dem Auswertegerät 102 oder Steuergerät 102 verbunden. Die von dem Sensor 100 generierten Messwerte werden drahtgebunden an das Auswertegerät 102 übermittelt. Bei der Übertragung zwischen Sensor 100 und Auswertegerät 102 über den Bus 101 kann zwischen einer analogen Übertragung und einer digitalen Übertragung unterschieden werden. Eine analoge Übertragung kann beispielsweise mittels eines 4...20mA-Signal erfolgen. Eine digitale Übertragung oder digitale Kommunikation kann mittels einem Feldbusprotokoll, beispielsweise HART^{®}-Profibus, Fieldbus Foundation, erfolgen.

Wie in Fig. 2 gezeigt, ist es mittels eines erfindungsgemäßen Sende-Empfangsgeräts möglich, den drahtgebundenen Bus 101 aufzutrennen und durch eine drahtlose Verbindung 200 zu ersetzen. Dazu kommen in Fig. 2 zwei Sende-Empfangsgeräte T und R zum Einsatz. Die beiden Sende-Empfangsgeräte T und R basieren dabei auf derselben Hardwareplattform, die jedoch in unterschiedlichen Konfigurationen oder in unterschiedlichen Betriebszuständen zum Einsatz kommt.

Feldgerätseitig, d. h. auf der mit dem Feldgerät 100 verbundenen Seite, kommt das Sende-Empfangsgerät in der Konfiguration als drahtlose Sendeeinrichtung (Transmitter) zum Einsatz. Im Folgenden soll ein feldgerätseitiges Sende-Empfangsgerät mit der Bezeichnung T gekennzeichnet werden.

Auf der auswertegerätseitigen Seite kommt das Sende-Empfangsgerät in der Konfiguration oder in dem Betriebszustand als drahtlose Empfangseinrichtung (Receiver) zum Einsatz. Ein auswertegerätseitiges Sende-Empfangsgerät soll im Folgenden mit dem Buchstaben R gekennzeichnet werden.

In der Fig. 2 ist kein Auswertegerät gezeichnet, da Fig. 2 den einfachen Fall der Auftrennung eines analogen Feldgerätebusses darstellt. Dazu kommuniziert die drahtlose Sendeeinrichtung T über das HART^{®}-Protokoll über die Verbindung 201 mit dem Sensor 100. Mittels des HART^{®}-Protokolls lässt sich zwar nach dem HART^{®}-Standard über die Verbindung 201 ein anlaoger Stromwert parallel zu digitalen Informationen übertragen, da ein einziges Feldgerät an dem HART^{®}-Bus angeschlossen ist. Für den in Fig. 2 dargestellten Fall sei jedoch zunächst angenommen, dass über die Verbindung 201 ein analoger 4...20 mA Stromwert mit der drahtlosen Sendeeinrichtung T ausgetauscht wird.

Die von der Sendeeinrichtung T über die analoge Verbindung 201 aufgenommenen analogen Messwerte werden in ein Funkprotokoll gewandelt und als Funksignale über die Funkschnittstelle 200 an die drahtlose Empfangseinrichtung R übertragen. Die drahtlose Empfangseinrichtung R wandelt die empfangenen Funksignale wieder zurück in analoge Messwerte und stellt sie als 4...20mA-Signal auf der Verbindung 202 einem Auswertegerät oder eine speicherprogrammierbaren Steuerung (SPS) zur Verarbeitung zur Verfügung.

Bezogen auf den Messwerttransport findet ein Signalfluss in Fig. 2 von dem Sensor 100, der den Messwert aufnimmt, über die drahtlose Sendeeinrichtung T zu der drahtlosen Empfangseinrichtung R an den Ausgang 202 oder an die Feldgeräteschnittstelle 202 statt. Bei dem Feldgerät 100 kann es sich anstelle eines Sensors auch um einen Aktor handeln, wobei dann der Signalfluss in der umgekehrten Richtung, also von der Verbindung 202 über die drahtlose Empfangseinrichtung R, die drahtlose Funkverbindung 200, die drahtlose Sendeeinrichtung T und die Verbindung 201 zu dem Aktor 100 stattfindet. Somit können auch Vorgänge des Aktors gesteuert werden.

Trotz der durch den Messwertfluss vorgegebenen Richtung von einem Sensor 100 zu der Verbindung 202 kann zwischen der drahtlosen Sendeeinrichtung und der drahtlosen Empfangseinrichtung R eine bidirektionale Kommunikation zum Austauschen von Steuersignalen stattfinden. Mittels der in Fig. 2 dargestellten Messwertübertragungsanordnung ist die drahtlose Übertragung eines analogen 4...20mA-Signals möglich. Die drahtlose Sendeeinrichtung T und die drahtlose Empfangseinrichtung R können bei diesem Einsatz als Gateway zur drahtlosen Kommunikation betrachtet werden. Dabei wandelt die drahtlose Sendeeinrichtung T eine Feldgeräteschnittstelle 203 in die Funkschnittstelle 204 um und die drahtlose Empfangseinrichtung R wandelt die Funkschnittstelle 205 in die Feldgeräteschnittstelle 206 um, an der die Verbindung 202 angeschlossen ist.

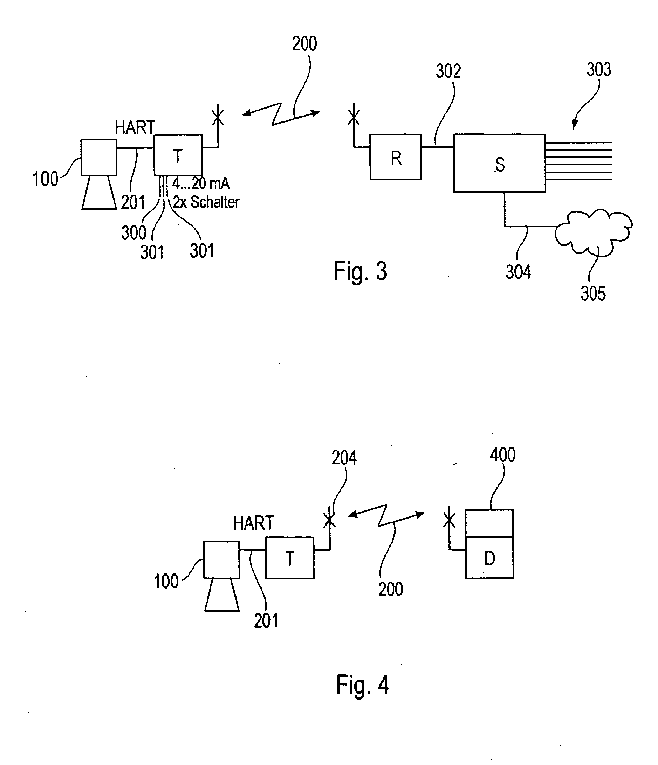

Fig. 3 zeigt eine drahtlose Messwertübertragungsanordnung mit einem Auswertegerät gemäß einem exemplarischen Ausführungsbeispiel der vorliegenden Erfindung. Auch mittels der in Fig. 3 dargestellten Anordnung lässt sich ein Feldbus 101 auftrennen und durch eine drahtlose Kommunikation 200 ersetzen. Der Sensor 100 ist über die HART^{®}-Verbindung 201 mit der drahtlosen Sendeeinrichtung T verbunden. Für die in der Fig. 3 dargestellte HART^{®}-Verbindung 201 soll nun digitale Kommunikation angenommen sein.

Die in Fig. 3 dargestellte Sendeeinrichtung T weist neben der HART^{®}-Schnittstelle 201 zusätzlich eine rein analoge Feldgeräteschnittstelle 300 in der Form einer 4...20mA-Schnittstelle und außerdem zwei digitale Schnittstellen 301 für Schaltsignale auf. Diese zusätzlichen Feldgeräteschnittstellen lassen sich durch das Auswechseln eines Anschlussmoduls oder Sockelgehäusemoduls der drahtlosen Serideeinrichtung T bereitstellen. An der HART^{®}-Schnittstelle 201 lassen sich Standard-HART^{®}-Sensoren 100 anschließen. Über die HART^{®}-Schnittstelle wird mit einem angeschlossenen Feldgerät digital kommuniziert. An dem analogen Anschluss 300 oder der analogen Feldgeräteschnittstelle 300 lassen sich 4...20mA-Geräte anschließen. Die digitalen Eingänge 301 sind für den Anschluss von digitalen Schaltern, wie Grenzwertschaltern oder Alarmschaltern vorgesehen.

Die über die Schnittstellen oder Verbindungen 201, 300 und 301 empfangenen Signale, beispielsweise Messwerte, werden von der Sendeeinrichtung T in ein Funkprotokoll gewandelt und über die Funkverbindung 200 drahtlos an die drahtlose Empfangseinrichtung R weitergeleitet. Von der Empfangseinrichtung werden die Signale über ein proprietäres Protokoll an die Auswerteeinrichtung geleitet. Folglich kann der Sensor 100 bedient werden, als wäre er direkt mit der Auswerteeinrichtung oder dem Auswertegerät verbunden. Die Auswerteeinrichtung ist dabei eine Einrichtung, die in der Lage ist, Messwerte von einem Feldgerät 100 anzufragen und die empfangenen Messwerte wiederum darzustellen. Die Kommunikation zwischen dem Sensor 100 und der Auswerteeinrichtung findet dabei über eine "nested communicaion" statt, d.h. die HART^{®}-Protokoll-Telegramme werden in das Funkprotokoll eingepackt.

An der Empfangseinrichtung R ist über die Verbindung 302 der Datensammler S oder das Auswerte- oder Steuergerät S angeschlossen. Die Verbindung zwischen der drahtlosen Empfangseinrichtung R und dem Datensammler S kann über ein Standard-HART^{®}-Protokoll 302 erfolgen. Allerdings kann es auch erwünscht sein, Anpassungen an dem HART^{®}-Protokoll zur Kommunikation zwischen S und R vorzunehmen, so dass zwischen der drahtlosen Empfangseinrichtung R und dem Datensammler S ein proprietäres Kommunikationsprotokoll 302 abläuft. Dieses proprietäre Kommunikationsprotokoll kann auf dem HART^{®}-Protokoll basieren und durch entsprechende Anpassungen, beispielsweise der Anpassung eines Zeitverhaltens oder Timingverhaltens, Besonderheiten der drahtlosen Übertragung 200 berücksichtigen.

Der Datensammler S stellt ein abgesetztes Schnittstellengerät S dar. Das abgesetzte Schnittstellengerät S kann eine Vielzahl an Feldgeräteschnittstellen 303 aufweisen. Der Datensammler S weist beispielsweise drei analoge 4...20mA-Schnittstellen 303 und drei Schaltschnittstellen 303 auf. Die Schnittstellen 303 sind üblicherweise als Ausgänge geschalten, da meist eine Kommunikation der Messwerte des Feldgeräts 100 zu dem Datensammler S erfolgt. Bei der Steuerung eines Aktors 100 können die Feldgeräteschnittstellen 303 jedoch auch als Eingänge ausgebildet sein, um Steuersignale von dem Datensammler S an den Aktor 100 weiterzuleiten.

In dem Datensammler S oder dem abgesetzten Schnittstellengerät S kann eine Zuordnung zwischen den Feldgeräteschnittstellen 303 und den feldgerätseitigen Feldgeräteschnittstellen 201, 300 und 301 erfolgen. Somit lassen sich beliebige Sensoren 100 an den Ausgängen 303 darstellen und deren Signale entsprechend weiterverarbeiten. Der Datensammler S kann auch eine Anzeige-/Bedieneinrichtung zur Darstellung der Messwerte aufweisen.

Außerdem kann über die Kommunikationsschnittstelle 304 eine Bedienung des Datensammlers erfolgen. Die Kommunikationsverbindung 304 kann als RS-232 Schnittstelle oder Ethernetschnittstelle ausgebildet sein. Mittels des Kommunikationsnetz 305 an dem der Datensammler S angeschlossen ist, kann eine Fernbedienung des Datensammlers S erfolgen.

An die drahtlose Sendeeinrichtung T können digital kommunizierende HART^{®}-Sensoren, analoge 4...20mA-Sensoren und Grenzwertschalter angeschlossen werden.

Fig. 4 zeigt eine drahtlose Messwertübertragungsanordnung mit einer Anzeigeeinrichtung. In Fig. 4 erfolgt die Aufnahme eines Messwerts mittels des Sensors 100. Der Messwert wird über die HART^{®}-Schnittstelle 201 an die drahtlose Sendeeinrichtung T übertragen und über die Funkschnittstelle 204 versendet. Der Messwert wird mit der drahtlosen Anzeigeeinrichtung D empfangen und an der Anzeige-Bedieneinrichtung 400, die auf der drahtlosen Anzeigeeinrichtung D montiert ist, angezeigt. Die drahtlose Sendeeinrichtung T, die drahtlose Empfangseinrichtung R und die drahtlose Anzeigeeinrichtung D basieren auf derselben Hardwareplattform. Mittels Einstellung eines Betriebszustandes kann diese Hardwareplattform als drahtlose Sendeeinrichtung T, drahtlose Empfangseinrichtung R oder drahtlose Anzeigeeinrichtung D agieren.

Die drahtlose Anzeigeeinrichtung D entspricht im Wesentlichen einer drahtlosen Empfangseinrichtung R, bei der die Messwerte nicht über eine externe Feldgeräteschnittstelle 302, 206 oder 202 nach extern bereitgestellt werden, sondern über eine interne Feldgeräteschnittstelle, beispielsweise eine I²C-Schnittstelle an die Anzeige-/Bedieneinrichtung 400 weitergeleitet werden. Die Hardwareplattform der drahtlosen Sendeeinrichtung T, der drahtlosen Empfangseinrichtung R und der drahtlosen Anzeigeeinrichtung D weist dazu die gleichen I²C-Schleifkontakte auf, über die die Anzeige-/Bedieneinrichtung 400 eine Verbindung zu dem internen Bus aufbauen kann.

Folglich ist die Verwendung einer Anzeige-/Bedieneinrichtung 400 neben der Verwendung der drahtlosen Anzeigeeinrichtung D auch in der drahtlosen Sendeeinrichtung T und der drahtlosen Empfangseinrichtung R möglich. Die drahtlose Anzeigeeinrichtung D kann im Feld als eine Anzeigeeinrichtung zur Darstellung von Messwerten oder zur Parametrierung von Feldgeräten eingesetzt werden. Da für die Parametrierung eine Eingabemöglichkeit erwünscht ist, weist die Anzeige-/Bedieneinrichtung 400 Taster als Bedienelemente auf, mit denen Werte eingegeben werden können.

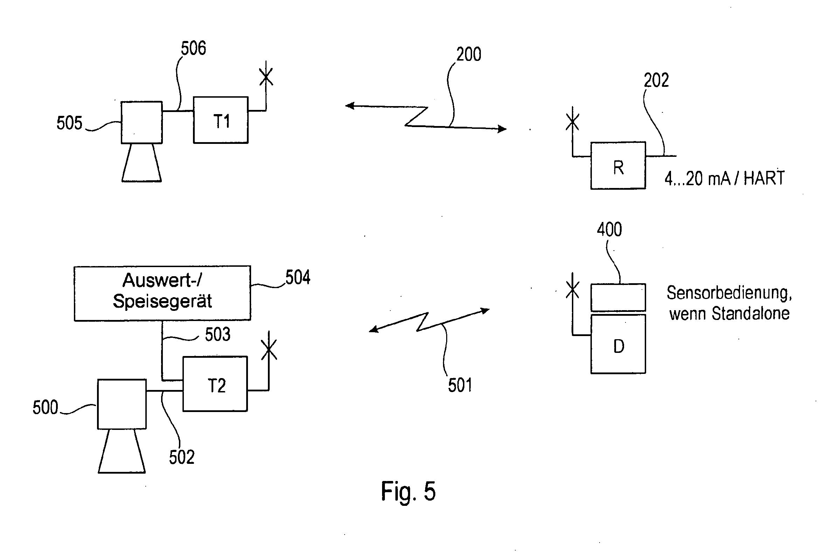

Fig. 5 zeigt zwei parallel betriebene drahtlose Messwertübertragungsanordnungen gemäß einem exemplarischen Ausführungsbeispiel der vorliegenden Erfindung. Da die Sende-Empfangsgeräte R, T, D eine einstellbare Frequenz aufweisen, können unterschiedliche Sende-Empfangsgeräte R, T, D störungsfrei parallel betrieben werden. So können die Funkübertragungsstrecken 200 und 501 durch die Verwendung unterschiedlicher Frequenzen voneinander entkoppelt werden. Die Frequenz kann auch während des Betriebes des Sende-Empfangsgerätes umgeschalten werden, wodurch ein so genanntes Frequenz-Hopping erreicht werden kann. Dabei können verschiedene Hopping-Sequenzen festgelegt werden, die in einer bestimmten Reihenfolge durchlaufen werden. Da sich die Frequenzsequenzen der einzelnen Geräte unterscheiden, kann weitestgehend vermieden werden, dass es zu Überlagerungen gleicher Frequenzen kommt.

Mittels des Alternierens der Frequenzen ist es auch möglich, die Fehleranfälligkeit der Funkübertragung zu reduzieren. So können beispielsweise örtliche Gegebenheit zu dem Auslöschen einer bestimmten Frequenzführen. Mittels Frequenzen, die sich während der Übertragung ändern, ist es möglich, dass durch die Frequenzauslöschung nur einige Funktelegramme gestört werden. Diese gestörten Funktelegramme können jedoch durch eine wiederholte Übertragung sicher übertragen werden.

Folglich kann gleichzeitig eine Bereitstellung des analogen 4...20mA-Signals des Messgeräts 505 an dem Ausgang 202 erfolgen, während an der Anzeige-/Bedieneinrichtung 400 die Anzeige eines über einen HART^{®}-Anschluss 502 aufgenommenen Signals erfolgt. Die drahtlosen Sendeeinrichtungen T1 und T2 befinden sich beide in dem Betriebszustand, der sie als Sendeeinrichtung auszeichnet.

Darüber hinaus bieten die drahtlosen Sendeeinrichtungen T1 und T2 unterschiedliche Feldgeräteschnittstellen. Die drahtlose Sendeeinrichtung T1 stellt beispielsweise die analoge 4...20mA-Signal-Verbindung 506 zur Verfügung, über die analoge Messwerte des Messsensors 505 abgefragt werden. Hingegen stellt die Sendeeinrichtung T2 beispielsweise die HART^{®}-Verbindung 502 zur Verfügung über welche die Messwerte des HART^{®}-Sensors 500 abgefragt werden.

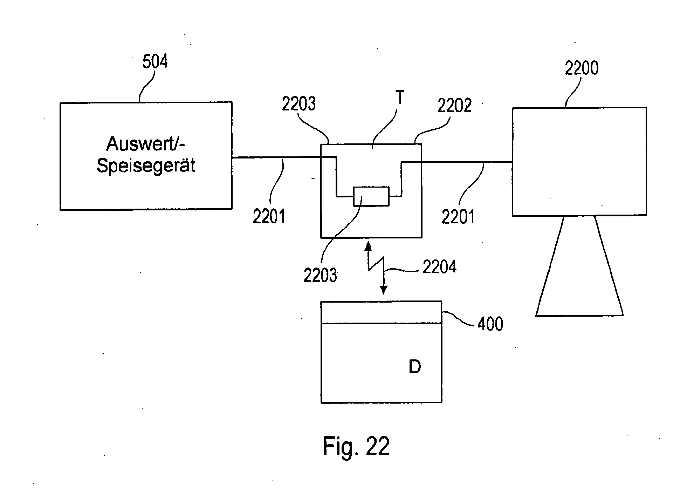

Dass die Anzeige-/Bedieneinrichtung 400 nicht nur auf die Darstellung von Signalen, die über einen HART^{®}-Anschluss bereitgestellt wurden beschränkt ist, zeigt Fig. 22. Das in Fig. 22 dargestellte Sende-Empfangsgerät T wurde in die analoge 4...20mA Signalverbindung 2201 eines bestehenden Messsystems eingeschleift. In dieser Konfiguration verhält sich das Sende-Empfangsgerät T passiv. In anderen Worten bedeutet das, dass das Sende-Emfangsgerät T keine eigene Stromversorgung für den Sensor 2200 aufweist. Der aufgetrennte analoge 4...20mA Signal-Bus 2201 ist sensorseitig mit dem passiven 4...20mA Signal Eingang 2202 verbunden. Das Auswert-/Speisegerät 504 ist über den 4...20mA Signal-Bus 2201 mit dem passiven 4...20mA Signal Ausgang 2203 verbunden. Die Durchschleif-Einrichtung 2203 schließt den durch das Sende-Empfangsgerät T unterbrochenen analogen 4...20mA Signal-Bus. Die Durchschleif-Einrichtung 2201 sorgt auch dafür, dass die Messwerte, die über den analogen 4...20mA Signal-Bus 2201, von dem Sensor 2200 an das Auswertgerät 504 geschickt werden, in ein Funkprotokoll verpackt werden und über die Funkschnittstelle 2204 an die drahtlose Anzeigeeinrichtung D übertragen werden. Schließlich werden die empfangenen Daten von der Anzeigeeinrichtung D aufbereitet und auf der Anzeige-/Bedieneinrichtung 400 dargestellt.

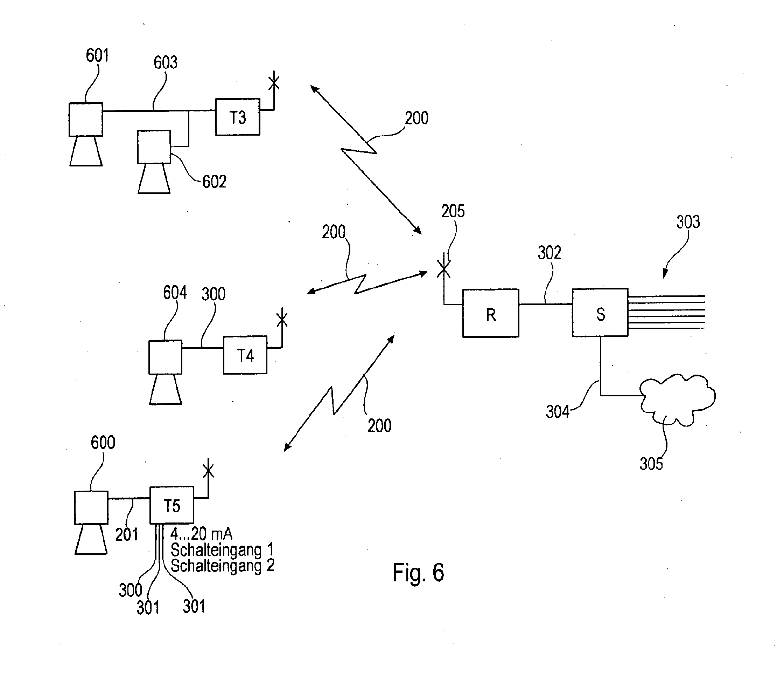

Fig. 6 zeigt eine drahtlose Messwertübertragungsanordnung mit mehreren Teilnehmern. Dabei verbindet die drahtlose Sendeeinrichtung T3 die beiden HART^{®}-Sensoren 601 und 602 mit der drahtlosen Empfangseinrichtung R. Die HART^{®}-Sensoren 601 und 602 befinden sich in dem Multidrop-Modus.

Die drahtlose Sendeeinrichtung T4 verbindet drahtlos den analogen Sensor 604 mit der Empfangseinrichtung R. Der analoge Sensor 604 kommuniziert mit der drahtlosen Sendeeinrichtung T4 über das analoge Feldgeräteprotokoll 300, das als 4...20mA-Signal ausgebildet ist.

Die drahtlose Sendeeinrichtung T5 verbindet den HART^{®}-Sensor 600 über die HART^{®}-Verbindung 201 mit der drahtlosen Sendeeinrichtung T5.

Die drahtlose Sendeeinrichtung T5 bietet ferner die Möglichkeit, an dem analogen Anschluss 300 einen 4...20mA-Sensor anzuschließen. Außerdem können an die beiden Schalteingänge 301 digitale Signalgeber, wie beispielsweise Füllstandgrenzschalter oder allgemeine Grenzwertschalter angeschlossen werden.

Sämtliche über die Funkschnittstelle 205 von der drahtlosen Empfangseinrichtung R empfangene Funksignale werden von der drahtlosen Empfangseinrichtung R in ein Feldbusprotokoll umgewandelt und über die Feldbusverbindung 302 an den Datensammler S gebündelt weitergeleitet. In dem Datensammler S erfolgt eine Zuordnung von einzelnen Messsensoren 600, 601, 604 und 602, 300 und 301 zu den entsprechenden Ausgangsschnittstellen 303. Der Datensammler S kann drei analoge 4...20mA-Signale und gleichzeitig drei digitale Schalteingänge bereitstellen. Es können somit an den Ausgängen 303 die Signale der Sensoren 601, 100 und 600 und die Signale der an den Digitaleingängen 301 angeschlossenen Sensor dargestellt werden.

Die Zuordnung der einzelnen entfernten Sensoren oder Feldgeräteschnittstellen 300, 301, 600, 601, 602, 604 zu den Feldgeräteschnittstellen 303 an dem Datensammler S, kann über die Zuordnung mittels Adressen erfolgen. Die drahtlose Sendeeinrichtung T3 stellt den HART^{®}-Bus 603 zur Verfügung, an dem gleichzeitig mehrere Sensoren 601 und 602 im Multidrop_Modus zur digitalen Kommunikation angeschlossen sind. Jeder einzelne der Sensoren 601, 602 ist einem Ausgang 303 eindeutig zuordenbar.

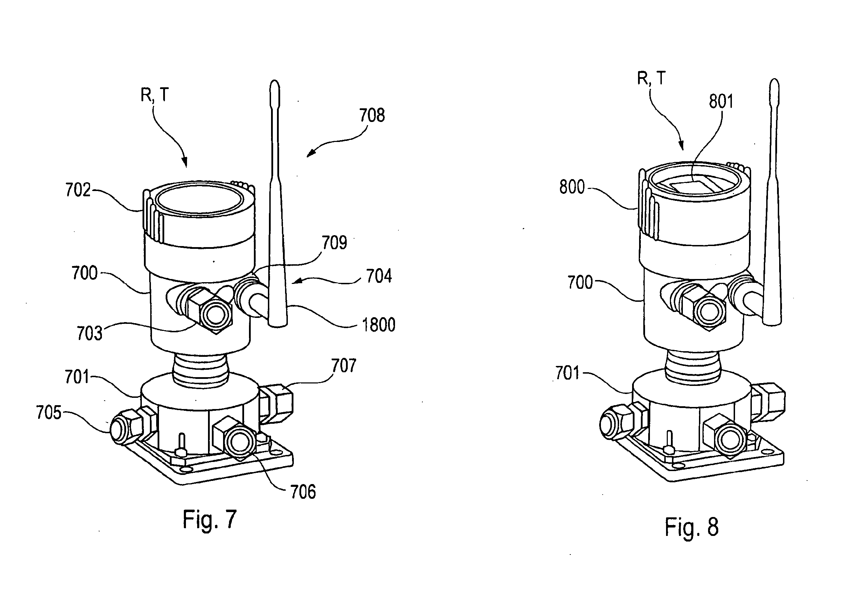

Fig. 7 zeigt ein Sende-Empfangsgerät in einem Kunststoffgehäuse gemäß einem Ausführungsbeispiel der vorliegenden Erfindung. Das Sende-Empfangsgerät R, T ist dabei als drahtlose Sendeeinrichtung T oder als drahtlose Empfangseinrichtung R ausgebildet. Den Betriebszustand, in dem sich das Sende-Empfangsgerät R, T befindet, wird beispielsweise durch einen gerätespezifischen Parameter festgelegt.

Die Fig.7 zeigt dabei das Gehäuse 708 einer drahtlosen Sendeeinrichtung T oder einer drahtlosen Empfangseinrichtung R. Das Gehäuse 708 weist das Kopfgehäusemodul 700 und das Sockelgehäusemodul 701 auf. Das Sockelgehäusemodul zeigt die Zuführungen 705, 706 und 707, wobei die Zuführung 707 als Zuführung für den 4...20mA Signal Anschluss zu einer Feldgeräteschnittstelle ausgebildet ist und die Zuführung 706 als Zuführung zu dem HART^{®}-Anschluss ausgebildet ist, während die Zuführung 705 als Zuführung zu den Digitalanschlüssen oder Schalteingängen ausgebildet ist. Das Kopfgehäusemodul 700 weist den abdrehbaren Deckel 702 auf, mit dem das Innere des Kopfgehäusemoduls zugänglich wird.

An dem Kopfgehäusemodul 700 ist außerdem ein Anschluss 703 für eine Stromzufuhr vorgesehen und außerdem ist an dem Kopfgehäusemodul 700 die Funkschnittstelle 704 oder Antenne 704 angeordnet. Die Antenne 704 ist mittels einer M20x1,5 709 oder alternativ einem ½"NPT-Anschlussgewinde 709 an dem Kopfgehäusemodul 700 befestigt. Die Antenne 704 ist mittels der Verschraubung 709 rechtwinklig an dem Gehäuse angeordnet und ist mittels dem Gelenk 1800 bis zu einem Winkel von im Wesentlichen 90° abwinkelbar, so dass die Antenne 704 im Wesentlichen parallel zu der Gehäusewand des Kopfgehäusemoduls 700 verläuft.

Das Gehäuse 708 ist modular aufgebaut. Das Kopfgehäusemodul 700 und das Sockelgehäusemodul 701 lassen sich zu dem Gehäuse 708 zusammensetzen, so dass das Sockelgehäusemodul von dem Kopfgehäusemodul abnehmbar ist. Das Sockelgehäusemodul 701 stellt eine physikalische Schnittstelle für das Kopfgehäusemodul, insbesondere für eine in dem Kopfgehäusemodul 700 untergebrachte Schaltung, bereit. Aufgrund der im Sockelgehäusemodul 701 eingesetzten Schnittstelle bzw. der Einstellung der Schaltung im Kopfgehäusemodul 700, wird der Betriebszustand bestimmt wodurch bestimmt wird, ob das Sende-Empfangsgerät 708 als Sendeeinrichtung T oder als Empfangseinrichtung R agiert.

Zur Einstellung des entsprechenden Betriebszustandes kann das Sockelgehäusemodul derart codiert sein, dass die Schaltung im Kopfgehäusemodul das jeweils angeschlossene Sockelgehäusemodul erkennt und somit selbstständig oder automatisch den jeweiligen Betriebszustand R, T einstellen kann.

Fig. 8 zeigt ein Sende-Empfangsgerät mit einer Anzeige-/Bedieneinrichtung in einem Kunststoffgehäuse gemäß einem exemplarischen Ausführungsbeispiel der vorliegenden Erfindung. Die Verwendung eines Kunststoffgehäuses ermöglicht es, das Sende-Empfangsgerät 708 in einer säurebelasteten Umgebung einzusetzen. In anderen Worten schützt das Kunststoffgehäuse eine in dem Gehäuse untergebrachte Schaltung vor Einflüssen, die durch eine säurebelastete Umgebungsluft auf die Schaltung wirken würde.

Der Aufbau des Gehäuses entspricht im Wesentlichen dem in Fig. 7 dargestellten Gehäuse. Im Gegensatz zu dem in Fig. 7 dargestellten Gehäuse weist das Kopfgehäusemodul 700 ein Anschlussgehäuse bzw. einen gegenüber den Deckel 702 erhöhten Deckel 800 auf, um die Anzeige-/Bedieneinrichtung 801 aufzunehmen.

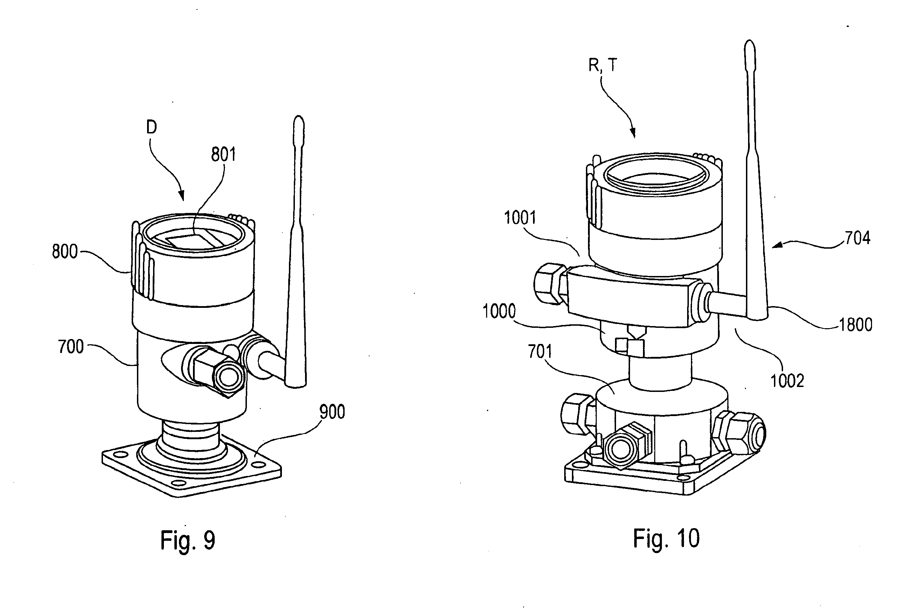

Fig. 9 zeigt ein Sende-Empfangsgerät mit Bodenplatte in einem Kunststoffgehäuse gemäß einem exemplarischen Ausführungsbeispiel der vorliegenden Erfindung. Das Kopfgehäusemodul 700 entspricht wiederum dem Kopfgehäusemodul für eine drahtlose Sendeeinrichtung T und für eine drahtlose Empfangseinrichtung R. Das in Fig. 9 dargestellte Gehäuse dient mit der in dem Gehäuse angeordneten Anzeige-/Bedieneinrichtung 801 der Anzeige von Funksignalen oder der in den Funksignalen enthaltenen Feldgerätesignale. Mit der Bodenplatte 900 kann das Kopfgehäusemodul 700 zusammen mit dem erhöhten Deckel 800 und der Anzeige-/Bedieneinrichtung 801 an einer Wand befestigt werden.

Die Bodenplatte 900 stellt keine Schnittstellen zur Verfügung da der Messwert intern im Gehäuse 708 verarbeitet wird und der Messwert somit nicht an ein anderes externes Gerät weitergegeben werden muss. Eine Steuerschaltung des Sende-Empfangsgerätes kann erkennen, dass die Gehäusebodenplatte 900 anstelle einer Schnittstelleneinrichtung 701 als Sockelgehäusemodul angebracht ist und die Steuerschaltung kann das Sende-Empfangsgerät in einen Betriebszustand zur Anzeige von Messwerten oder als Anzeigeeinrichtung versetzen.

Fig. 10 zeigt ein Sende-Empfangsgerät in einem Aluminiumgehäuse. Das Kopfgehäusemodul 1000 aus Aluminium weist eine hohe mechanische Belastbarkeit auf.

Das Sockelgehäusemodul 701 entspricht dem Sockelgehäusemodul des Kunststoffgehäuses und ist ebenfalls aus Kunststoff gefertigt. Das Arischlussgehäuse 701 oder das Sockelgehäusemodul 701 kann wiederum ausgewechselt werden und dem Kopfgehäusemodul 1000 unterschiedliche physikalische Schnittstellen bereitstellen.

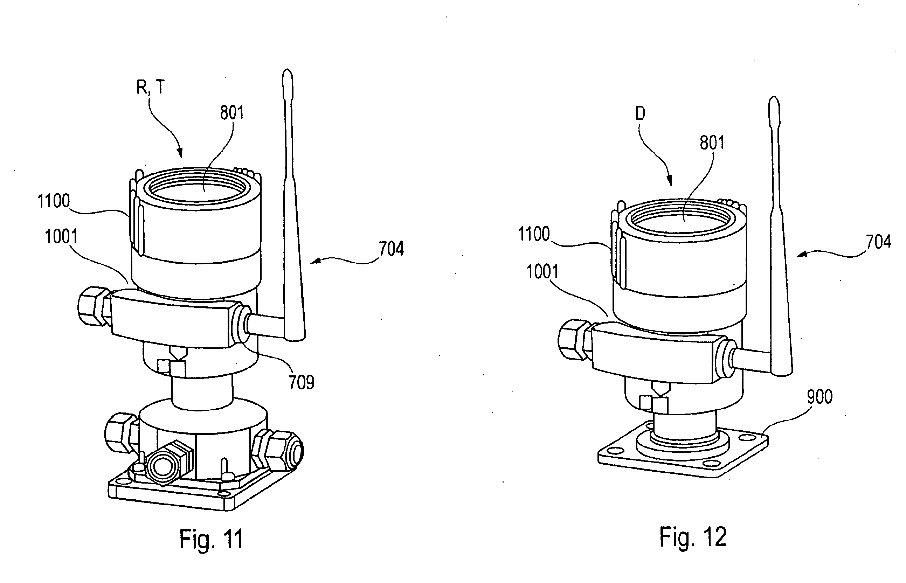

Fig. 11 zeigt ein Sende-Empfangsgerät mit einer Anzeige-/Bedieneinrichtung in einem Aluminiumgehäuse gemäß einem exemplarischen Ausführungsbeispiel der vorliegenden Erfindung. Zum Unterbringen der Anzeige-/Bedieneinrichtung 801 ist auch bei dem Aluminiumgehäuse 1001 ein gegenüber dem Deckel 702 erhöhter Deckel 1100 vorgesehen, der es ermöglicht, die Anzeige-/Bedieneinrichtung 801 an einer Sendeeinrichtung T bzw. einer Empfangseinrichtung R zu betreiben. Die Antenne 704 ist mit der Verschraubung 709 an dem Kopfgehäusemodul 1001 1 befestigt.

Fig. 12 zeigt ein Sende-Empfangsgerät mit einer Bodenplatte in einem Aluminiumgehäuse. Das Gehäuse aus Aluminium 1001 und der Deckel aus Aluminium 1100 entsprechen dem Gehäuse mit dem Deckel der Fig. 11. Da das Sende-Empfangsgerät D lediglich der Anzeige von Messwerten dienen soll, ist auf ein Sockelgehäusemodul verzichtet worden und stattdessen die Bodenplatte 900 an dem Kopfgehäusemodul 1001 angebracht.

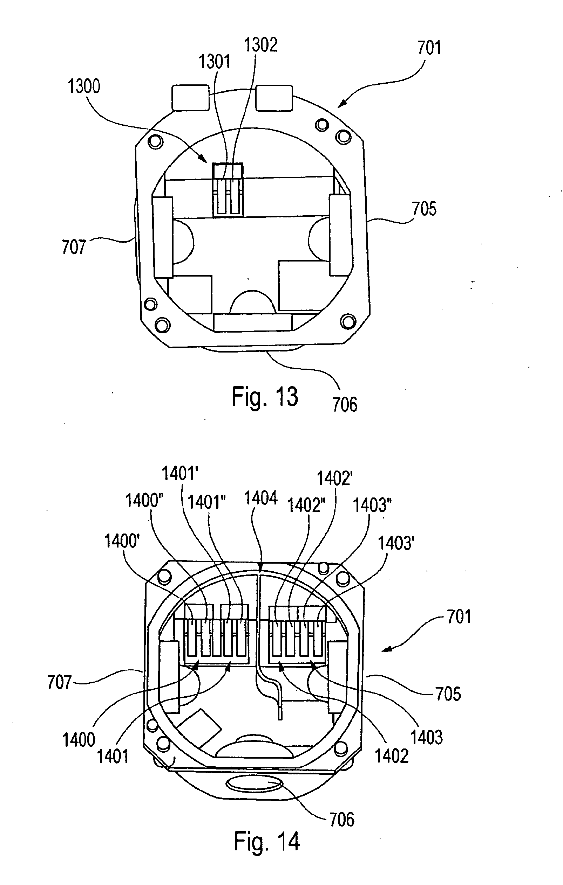

Fig. 13 zeigt ein Sockelgehäusemodul mit einem Anschluss für ein Zweileiter-Feldgerät gemäß einem exemplarischen Ausführungsbeispiel der vorliegenden Erfindung. Fig. 13 zeigt einen Blick auf die Unterseite eines Sockelgehäusemoduls 701. Das Sockelgehäusemodul 701 weist die Durchbrüche 705, 706 und 707 auf, durch die beispielsweise ein Anschlusskabel in das Sockelgehäusemodul eingeführt werden kann. Das Sockelgehäusemodul 701 stellt den Anschluß 1300 zur Verfügung. Der Anschluss 1300 kann dabei sowohl als aktiver HART^{®}-Eingang oder passiver HART^{®}-Eingang, als aktiver HART^{®}-Ausgang oder als aktiver 4...20mA-Signalausgang konfiguriert sein.

Die Konfiguration des Anschluss 1300 kann über eine Einstellung des Sende-Empfangsgeräts erfolgen, die Konfiguration kann aber auch mittels einer Kennung oder Codierung an dem Sockelgehäusemodul 701 von dem Sende-Empfangsgerät T, R, D erkannt werden. Aufgrund der bereitgestellten Schnittstelle 1300 kann ein Betriebszustand des Sende-Empfangsgeräts T, R, D eingestellt werden.

Der Anschluss 1300 weist die Klemmen 1301 und 1302 auf. Dabei bezeichnet die Klemme 1301 eine positive Klemme, während die Klemme 1302 eine negative Klemme bezeichnet. Die Festlegung, ob der Anschluss 1300 als Eingang oder Ausgang konfiguriert ist, hängt wiederum von dem Betriebszustand, in dem sich das Sende-Empfangsgerät befindet, ab.

Fig. 14 zeigt ein Sockelgehäusemodul mit mehreren Anschlüssen gemäß einem exemplarischen Ausführungsbeispiel der vorliegenden Erfindung. In Fig. 14 ist ebenfalls die Unterseite eines Sockelgehäusemoduls 701 mit den Durchlässen 705, 706 und 707 zu sehen. Das Sockelgehäusemodul weist die Anschlüsse 1400, 1401, 1402 und 1403 auf. Der Anschluss 1400 ist als aktiver analoger 4...20mA-Eingang oder passiver analoger 4...20mA-Eingang konfigurierbar. Der Anschluss 1401 ist als aktiver Eingang mit digitaler Kommunikation oder als passiver Eingang mit digitaler Kommunikation, als aktiver Ausgang mit digitaler Kommunikation oder als aktiver 4...20mA-Ausgang konfigurierbar. An dem aktiven Ausgang mit digitaler Kommunikation kann der Datensammler S angeschlossen werden. An dem aktiven 4...20mA-Ausgang kann einen SPS angeschlossen werden. Einem Sensor gegenüber, der an der drahtlosen Sendeeinrichtung T angeschlossen ist, verhält sich die drahtlose Sendeeinrichtung T wie ein Master und wartet auf die Antwort des Sensors, welcher als Slave konfiguriert ist.

Die drahtlose Empfangseinrichtung R ist gegenüber dem Datensammler S als Slave eingerichtet und antwortet auf Anfragen von dem Datensammler S.

Die Anschlüsse 1400 und 1401 sind eigensicher ausgebildet, das bedeutet, dass intern Maßnahmen getroffen worden sind, um Anforderungen zu erfüllen, die es erlauben, Sensoren, die sich in einem Ex-Schutzbereich befinden, an dem Sende-Empfangsgerät T, R, D anzuschließen und zu betreiben. Beispielsweise ist der an den Anschlüsse 1400 oder 1401 auftretende maximale Kurzschlussstrom begrenzt.

Zur Trennung des eigensicheren Bereiches von einem nicht eigensicheren Bereich ist die Trennwand 1404 vorgesehen. In dem nicht eigensicheren Bereich sind die beiden Digitaleingänge 1402 und 1403 angeordnet. Der analoge Anschluss 1400 weist die positive Anschlussklemme 1400' und die negative Anschlussklemme 1402' auf. Der Anschluss 1401 weist die positive Anschlussklemme 1401' und die negative Anschlussklemme 1401" auf. Der Digitaleingang 1402, weist die negative Anschlussklemme 1402" und die positive Anschlussklemme 1402' auf.

Der zweite Digitaleingang 1403 weist die negative Anschlussklemme 1403" und die positive Anschlussklemme 1403' auf. Die Anschlussklemmen 1301, 1302, 1400', 1400", 1401', 1401", 1402', 1402", 1403' und 1403" sind als Federkraftklemmen für einen Kabeldurchmesser von 2,5 mm² ausgebildet.

Durch die unterschiedliche Konfiguration eines Sende-Empfangsgeräts, insbesondere durch die unterschiedlichen Betriebszustände, lassen sich verschiedene Konfigurationen der Anschlüsse 1300, 1400, 1401, 1402 und 1403 unterscheiden.

Ist das Sende-Empfangsgerät als drahtlose Sendeeinrichtung T konfiguriert, so sind die Anschlüsse 1300, 1400, 1401, 1402 und 1403 als Eingänge konfiguriert. An einem HART^{®}-Eingang können HAR^{®}-kompatible Feldsensoren angeschlossen werden. Bei einem HART^{®}-Eingang lässt sich der aktive Modus und der passive Modus unterscheiden. Die Umschaltung der Modi kann beispielsweise durch Konfiguration eines Parameters, durch die Festlegung der Firmware oder durch die Festlegung des Betriebszustandes erfolgen. Im aktiven Modus steht sowohl für einen Eingang als auch für einen Ausgang an den Klemmen 1300, 1400 und 1401 die Versorgungsspannung für den Betrieb der angeschlossenen Sensoren zur Verfügung. Im Falle eines aktiven Ausgangs liefert das Sende-Empfangsgerät R, T, D an den Anschlussklemmen 1300, 1400, 1401 einen Strom. Im passiven Modus können Sensoren mit eigener Energieversorgung angeschlossen werden.

In anderen Worten bedeutet das, dass an einem aktiven HART^{®}-Eingang ein Zweileitersensor anschließbar ist, da über den aktiven Eingang dem Sensor eine Versorgungsspannung bereitstellbar ist. Hingegen liefert der Zweileitersensor digitale Messwerte an den aktiven Eingang. Ein aktiver 4...20mA Signal Eingang stellt ebenfalls eine Versorgungsspannung für einen Sensor zur Verfügung und der angeschlossenen 4...20mA Sensor stellt einen Strom ein, der dem Messwert entspricht. Dieser kann von dem Sende-Empfangsgerät T beispielsweise über einen Messwiderstand gemessen werden.

Ein passiver Eingang ist hingegen ein Eingang, der keine Versorgungsspannung an einen angeschlossenen Sensor liefert. An einen passiven HART^{®}-Eingang kann folglich ein Vierleiter-Gerät angeschlossen werden, welches von einer externen Spannungsversorgung versorgt wird. Ein passiver 4...20mA Eingang dient der Ermittlung eines analogen Stromes, der einem Messwert entspricht. Der passive 4...20mA Eingang stellt jedoch keine Versorgungsspannung zur Verfügung. Diese wird beispielsweise von einer externen Spannungsquelle bereitgestellt. Der Sensor stellt mit Hilfe der externen Spannung einen Strom ein, der mit einem Messwiderstand in dem Sende-Empfangsgerät T gemessen werden kann.

Ein aktiver Ausgang des Sende-Empfangsgerätes R verhält sich wie ein aktiver Ausgang eines Sensors. Dabei weist ein aktiver Ausgang eines Sende-Empfangsgerätes R eine Spannungsversorgung auf und treibt einen Strom entsprechend dem Messwert an dem aktiven Ausgang. Der aktive Ausgang arbeitet als eine Stromquelle.

Bei einem passiven Ausgang wird eine externe Spannungsversorgung bereitgestellt. Mit Hilfe der externen Spannungsversorgung wird ein Strom durch den passiven Ausgang entsprechend dem Messwert gezogen. Der passive Ausgang arbeitet als Stromsenke.

In dem Betriebszustand, in dem das Sende-Empfangsgerät als drahtlose Sendeeinrichtung T arbeitet, ist eine Feldgeräteschnittstelle 1300, 1400, 1401, 1402, 1403 mit einem Feldgerät 100, 500, 505, 600, 601, 602, 604 verbunden. Für die Kommunikation mit dem Feldgerät 100, 500, 505, 600, 601, 602, 604 über einen HART^{®}-Bus 1300, 1401 arbeitet die drahtlose Sendeeinrichtung als HART^{®}-Master, wobei die drahtlose Sendeeinrichtung sowohl als Primary Master als auch als Secondary Master arbeiten kann. Ein zweiter Master auf dem HART^{®}-Bus kann dabei zulässig sein. Die Einstellung als HART^{®}-Master erfolgt ebenfalls über die Feststellung des aktuellen Betriebszustandes.

Als HART^{®}-Master ist die drahtlose Sendeeinrichtung T ausgebildet Kommandos an Feldgeräte 100, 500, 505, 600, 601, 602, 604 abzusetzen und somit die Feldgeräte 100, 500, 505 600, 601 und 602 abzufragen.

Es können bis zu drei HART^{®}-Sensoren an eine Anschlussklemme 1300 oder 1401 angeschlossen werden. Sind drei Sensoren angeschlossen, so werden die HART^{®}-Adressen #1, #2 und #3 verwendet. Wird nur ein Sensor angeschlossen, so kann dieser Sensor 100, 500, 505, 600, 601 602 und 604 die Adressen #0, #1, #2 oder #3 benutzen. Werden mehrere HART^{®}-Sensoren angeschlossen, so werden diese parallel mit der Anschlussklemme 1300 oder 1401 verbunden.

Der Anschluss 1400 ist als 4...20mA-Eingang konfiguriert. Dabei ist für den analogen 4...20mA-Eingang 1400 ebenfalls ein aktiver Modus und ein passiver Modus zulässig. Im aktiven Modus liegt an dem Anschluss 1400 eine Spannung an und der über einen angeschlossenen Sensor fließende Strom wird gemessen.

Im passiven Modus wird die drahtlose Sendeeinrichtung T beispielsweise in einen Stromkreis, wie in Fig. 22 dargestellt, eingeschleift und der durch die drahtlose Sendeeinrichtung T fließende Strom wird gemessen um so den von einem Sensor 2200 bereitgestellten Messwert zu erhalten.

Die Umschaltung des Sende-Empfangsgerätes R, T, D zwischen aktivem Modus und passivem Modus kann ebenfalls über eine Konfiguration, über eine Firmwareeinstellung oder über die Erkennung des Betriebszustandes bzw. über die Erkennung des Sockelgehäusemoduls bestimmt werden.

Die drahtlose Sendeeinrichtung T weist ebenfalls die digitalen Schalteingänge 1402 und 1403 auf. An diesen digitalen Schalteingängen können beliebige Schalter, wie Schwimmschalter oder Relais, angeschlossen werden. Es können auch Grenzschalter mit Open Kollektor verwendet werden, wobei hier der Sensor eine eigene Stromversorgung benötigt.

Wird das Sende-Empfangsgerät auswertegerätseitig, d. h. in einem zweiten Betriebszustand bzw. als drahtlose Empfangseinrichtung R, betrieben, so können die Schnittstellen 1300 und 1401 als HART^{®}-Ausgang konfiguriert sein. Dabei arbeiten die HART^{®}-Ausgänge 1300 und 1401 als aktive HART^{®}-Ausgänge, d. h. als Stromquellen.

Für die Kommunikation mit dem an einem Ausgang 1300, 1401 mit digitaler Kommunikation angeschlossenen Datensammler S arbeitet die drahtlose Empfangseinrichtung R als Slave. Dabei findet die Kommunikation zwischen dem Datensammler S und der drahtlosen Empfangseinrichtung nach einem proprietären HART^{®}-ähnlichen Protokoll statt. Das bedeutet, dass die drahtlose Empfangseinrichtung R ausgebildet ist über die HART^{®}-Schnittstelle 302, 1300 und 1401 Kommandos zu empfangen und weiterzuverarbeiten um einen Messwert bereitzustellen. Diese Kommandos können sich jedoch von HART^{®}-Kommandos unterscheiden.

Aufgrund des Umstandes, dass es wegen der Funkstrecke zu Verzögerungen im Antwortverhalten kommen kann, kann zwischen der Verbindung der drahtlosen Empfangseinrichtung R und dem Datensammler S ein proprietäres Protokoll eingesetzt werden. Dabei kann einem besonderen Zeitverhalten aufgrund von Verzögerungen auf der Funkstrecke 200 Rechnung getragen werden. Das zwischen der drahtlosen Empfangseinrichtung R und dem Datensammler S ablaufende Protokoll auf der Verbindung 302 kann dabei von dem Standard-HART^{®}-Protokoll abweichen.

Die Anschlüsse 1300, 1400 und 1401 können bei Verwendung des Sende-Empfangsgeräts in dem zweiten Betriebszustand als analoge 4...20mA-Ausgänge konfiguriert sein. Sie können damit direkt mit einem Auswertegerät bzw. einer speicherprogrammierbaren Steuerung als Stand-alone-Gerät verbunden sein. Ein abgesetztes Schnittstellengerät ist somit nicht mehr zur Bereitstellung von Schnittstellen nötig. Der analoge Ausgang 1300, 1400 und 1401 kann an jeden passiven Analogeingang einer Auswerteeinrichtung angeschlossen werden.

Sind die Anschlussklemmen 1300, 1400 und 1401 als 4...20mA-Ausgänge eingerichtet, so arbeiten sie aktiv, d. h. als Stromquelle. Der an dem Stromausgange 1300, 1400 und 1401 eines als drahtlose Empfangseinrichtung R konfigurierten Sende-Empfangsgerät bereitgestellte Strom ist im Bereich 4...20mA variabel. Dabei ermittelt die drahtlose Empfangseinrichtung R den Sensorwert, der ihm von der drahtlosen Sendeeinrichtung T zur Verfügung gestellt wird. Dieser Sensorwert hat sich bei einer Abfrage des Sensors 100 durch die drahtlose Sendeeinrichtung T ergeben. Der Sensorwert wird von der drahtlosen Sendeeinrichtung T als Prozentwert im Bereich 0...100% an die drahtlose Empfangseinrichtung R übermittelt. R wandelt wiederum den empfangenen Prozentwert in einen Stromwert zurück, so dass 0% einem Ausgangsstrom von 4mA entspricht und 100% einem Ausgangsstrom von 20mA entspricht. R stellt den zurückgewandelten Stromwert an seinem Ausgang 302 und insbesondere an den Ausgangsklemmen 1300, 1400 und 1401 zur Verfügung. Dabei verhält sich R wie ein Proxy, also wie ein Zwischenspeicher für einen Messwert.

Das Verhalten der drahtlosen Empfangseinrichtung R im Störfall ist wählbar. Es gibt dabei die folgenden Möglichkeiten:
- der letzte an dem Ausgang 302 angelegte Stromwert bleibt unverändert erhalten;
- der an dem Ausgang 302 angelegte Stromwertnimmt einen Wert von 0 mA an;
- der an dem Ausgang 302 angelegte Stromwertnimmt einen Wert von 20,5 mA an;
- der an dem Ausgang 302 angelegte Stromwertnimmt einen Wert von 22 mA an;
- der an dem Ausgang 302 angelegte Stromwertliegt bei einem Wert von 0 % (beispielsweise 4mA) oder bei einem Wert von 100 % (beispielsweise 20mA).

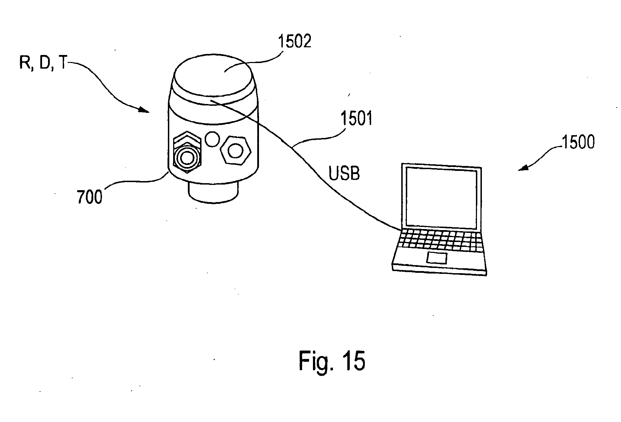

Fig. 15 zeigt eine Anordnung zum Parametrieren eines Sende-Empfangsgeräts gemäß einem exemplarischen Ausführungsbeispiel der vorliegenden Erfindung. Zum Parametrieren des Sende-Empfangsgeräts R, D, T, das in Fig. 15 durch das Kopfgehäusemodul 700 dargestellt ist, wird die Parametriervorrichtung 1500, die beispielsweise ein PC sein kann, über die Verbindung 1501, beispielsweise eine USB (Universal Serial Bus)-Verbindung, mit einer Parametrieranpassungseinrichtung 1502 angeschlossen. Die Parametrieranpassungseinrichtung 1502 kann dabei an die Schleifkontakte der internen Feldgeräteschnittstelle bzw. der I²C-Schnittstelle des Sende-Empfangsgerätes angeschlossen werden.

Zum Parametrieren kann auch die Anzeige-/Bedieneinrichtung 801 eingesetzt werden. Dazu kann eine Parametrierung für ein Sende-Empfangsgerät auf einem Speicher der Anzeige-/Bedieneinrichtung gespeichert werden. Die Anzeige-/Bedieneinrichtung 801 oder Parametriereinrichtung 801 ist mit dem Sende-Empfangsgerät koppelbar. Auf der Parametriereinrichtung 801 kann beispielsweise der Betriebszustand oder eine Adresse einer oder mehrerer Sende-Empfangsgeräte gespeichert werden.

Die Parametriereinrichtung 801 kann dann an ein zu parametrierendes Sende-Empfangsgerät gekoppelt werden. Das Sende-Empfangsgerät erkennt einen für das entsprechende Sende-Empfangsgerät auf der Anzeige-/Bedieneinrichtung 801 gespeicherten Parameter und kann die relevanten Parameter zum Parametrieren übernehmen. Dabei kann der Betriebszustand und insbesondere das Verhalten des Sende-Empfangsgeräts eingestellt werden. Es kann somit eingestellt werden, ob sich die entsprechende Sendeempfangseinrichtung als drahtlose Empfangseinrichtung oder als drahtlose Sendeeinrichtung verhält. Nachdem die Parametrierung der Sendeempfangseinrichtung erfolgt ist, kann der entsprechende Parametriereintrag für das entsprechende Sende-Empfangsgerät von der Anzeige-/Bedieneinrichtung gelöscht werden und die Anzeige-/Bedieneinrichtung 801 kann auf einem anderen Sende-Empfangsgerät zur Parametrierung angebracht werden.

Durch dieses Vorgehen kann vermieden werden, dass sich Fachpersonal zur Konfiguration eines Sende-/Empfangsgerätes vor Ort begeben muss, da die Parametrierung mittels der Anzeige-/Bedieneinrichtung auch von ungeübten Personen durchgeführt werden kann.

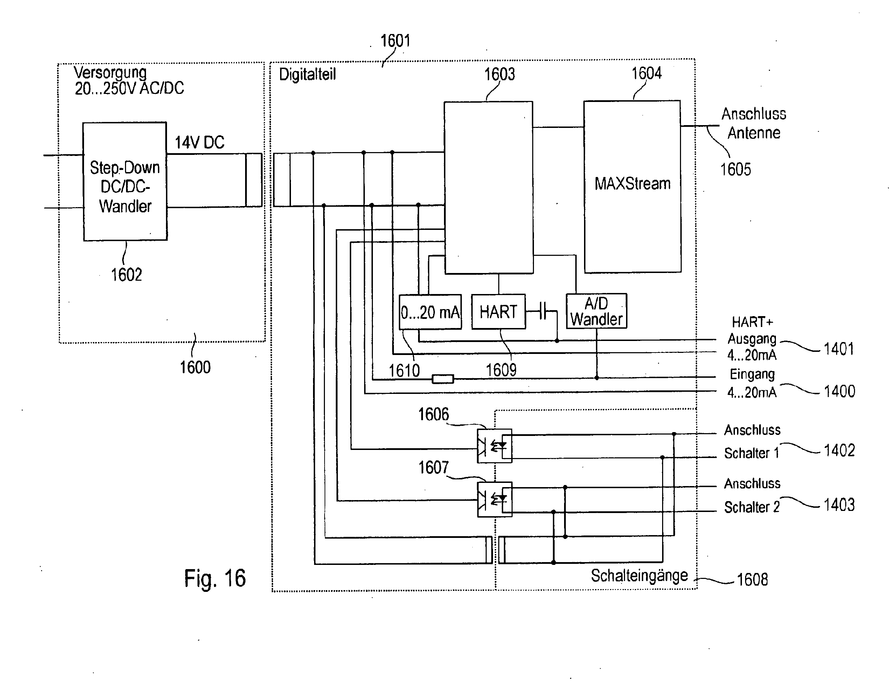

Fig. 16 zeigt ein Übersicht Blockdiagramm eines Sende-Empfangsgeräts gemäß einem exemplarischen Ausführungsbeispiel der vorliegenden Erfindung. In Fig. 16 ist die Spannungsversorgung 1600 mit dem Spannungswandler 1602 zu sehen. Dieser Spannungswandler 1602 stellt eine Versorgungsspannung für das Sende-Empfangsgerät T, R, D zur Verfügung. Mit der Versorgungsspannung wird der Digitalteil 1601 mit Spannung versorgt.

Der Digitalteil 1601 des Sende-Empfangsgerät dient der Auswertung der Ein- bzw. Ausgangssignale und der Festlegung des Betriebszustandes. Auf dem Digitalteil 1601 regelt die Umwandlungsschaltung 1603 die Konvertierung von Feldgeräteschnittstellensignalen in Funksignale. Abhängig von dem gewählten Betriebszustand nimmt im Falle einer drahtlosen Empfangseinrichtung R die Umwandlungsschaltung 1603 Funksignale des Funkmoduls 1604 entgegen und wandelt in der Konvertierungsschaltung 1603 diese in Signale, die an der Feldgeräteschnittstelle 1401 bereitgestellt werden können.

Ist das Sende-Empfangsgerät als drahtlose Sendeeinrichtung T konfiguriert, so nimmt die Umwandlungsschaltung 1603 Signale, die an den Eingängen 1401, 1400, 1402 oder 1403 von Feldgeräten geliefert werden entgegen und wandelt diese empfangenen Signale in Funksignale um. Die Umwandlungsschaltung 1603 gibt die Funksignale an das Funkmodul 1604 weiter und das Funkmodul 1604 strahlt schließlich die Funksignale über die Antenne 1605 ab.

Die Digitaleingänge 1402 und 1403 sind über die Optokoppler 1606 und 1607 mit der Umwandlungseinrichtung verbunden. Durch den Einsatz der Optokoppler 1606 und 1607 erfolgt eine galvanische Trennung der Ausgänge. Zur galvanischen Trennung dient zusätzlich der Übertrager 1608, der die Leuchtdioden 1606 und 1607 der Optokoppler mit Strom versorgt.

Ist das Sende-Empfangsgerät als drahtlose Empfangseinrichtung R konfiguriert, wird ein HART^{®}-Signal an der Feldgeräteschnittstelle 1401 mittels der HART^{®}-Anpassungsschaltung 1609 bereitgestellt. Die Schnittstelle 1401 kann auch als analoger Signalausgang konfiguriert sein, wobei dann die Signalanpassungsschaltung 1610 die Umwandlung in ein entsprechendes analoges Signal vornimmt.

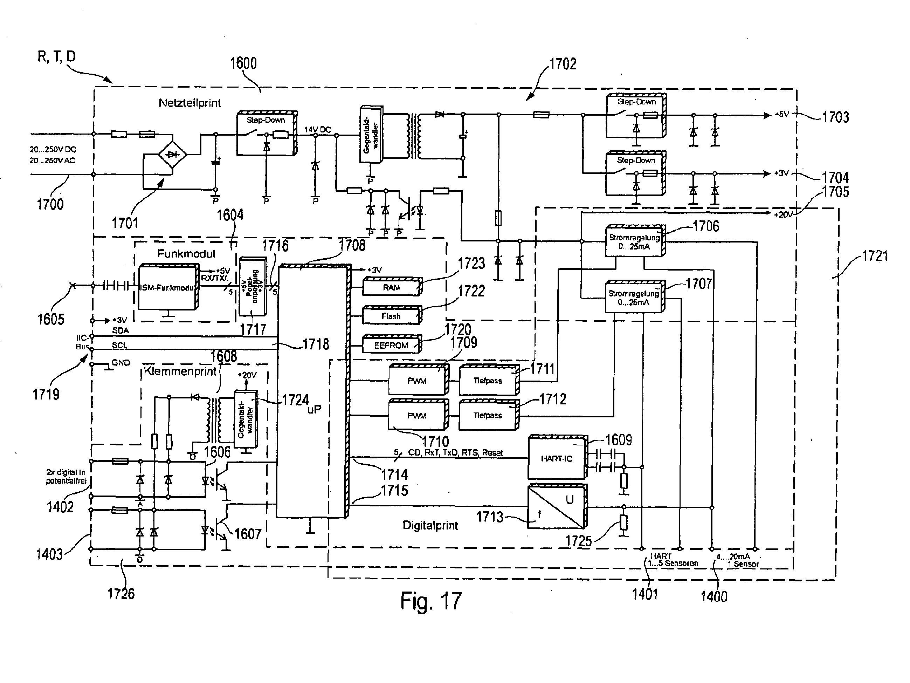

Fig. 17 zeigt ein Blockdiagramm eines Sende-Empfangsgeräts R, T, S gemäß einem exemplarischen Ausführungsbeispiel der vorliegenden Erfindung. Die in Fig. 17 dargestellte Schaltung beschreibt die gemeinsame Hardwareplattform für die drahtlose Empfangseinrichtung R, die drahtlose Sendeeinrichtung T und die drahtlose Anzeigeeinrichtung D.

Die Schaltung weist die Versorgung 1600 auf. Eine am Eingang 1700 bereitgestellte Gleichstrom- oder Wechselstromspannung im Bereich von 20 bis 250 V, die beispielsweise über den Durchbruch 703 dem Sende-Empfangsgerät R, T, D bereitgestellt wird, gelangt auf die Gleichrichterschaltung 1701 und wird mittels der Schaltungsanpassungsschaltung 1702 in die internen Versorgungsspannungen von 5 V 1703, von +3 V 1704 und +20 V 1705 umgeformt und der Schaltung zur Verfügung gestellt. Ebenfalls über die Versorgungsschaltung 1600 erfolgt die Stromversorgung für den analogen Ausgang 1400, mittels der Stromregelung 1706 und die Stromversorgung für den HART^{®}-Ausgangs 1401, mittels der Stromregelung 1707.

Der einzustellende Strom der Stromregelungen 1706 und 1707 wird über den Mikroprozessor 1708 und die Pulsweitenmodulationsschaltung 1709 und 1710 und die Tiefpassschaltung 1711 oder 1712 bereitgestellt. Die HART^{®}-Anpassungseinrichtung 1609 oder das HART^{®}-IC 1609 dient der Entgegennahme und Interpretation von HART^{®}-Kommandos bzw. Messwerten im HART^{®}-Format, die über den Anschluss 1401 bereitgestellt werden. Das HART^{®}-IC ist dabei für die Modulation bzw. für die Demodulation der digitalen Daten verantwortlich. Es wandelt die binäre Information in die zwei Frequenzen 1200 Hz für logisch "1"und 2200 Hz für logisch "0".

Die Spannungsfrequenzumsetzungsschaltung 1713 ermittelt den an dem analogen Eingang 1400 von beispielsweise einem 4...20mA-Sensor bereitgestellten Strom und führt ihn dem Prozessor 1708 zu. Der Strom entspricht dabei einem von dem 4...20mA-Sensor gemessenem Messwert. Zur Bestimmung des Stromes, wird der in den 4...20 mA - Eingang 1400 fließende Strom an dem Messwiderstand 1725 in eine Spannung gewandelt. Diese Spannung wird durch den U/F Wandler (SpannungsFrequenz-Wandler) in eine der Spannung proportionalen Frequenz gewandelt. Die Frequenz wird dem Mikroprozessor 1708 an dem Port 1715 zugeführt und von dem Mikroprozessor 1708 ausgewertet. So liegt dem Mikroprozessor 1708 der Messwert, der von dem Sensor gemessen wurde, in Form der gemessenen Frequenz vor. Dieser Wert kann nach einer entsprechenden Wandlung über die Funkschnittstelle 1605 übertragen werden.

Der Mikroprozessor 1708 dient der Aufnahme der HART^{®}-Signale über die fünf Schnittstellenleitungen 1714 und der Aufnahme von analogen Signalen in Form einer Frequenz über den Pin 1715.

Die ermittelten Werte können von dem Prozessor 1708 in Funksignale umgewandelt werden und an den fünf Signalleitungen 1716 über die Pegelanpassungsschaltung 1717 dem Funkmodul 1604 bereitgestellt werden. In der Pegelanpassung 1717 erfolgt die Leistungsbegrenzung auf einen Maximalwert und in dem Funkmodul 1604 erfolgt die Auswahl der Funkfrequenz. Über das Funkmodul gelangen die Funksignale schließlich an die Antenne 1605 und werden über die Luftschnittstelle übertragen.

Der Mikroprozessor 1708 stellt auch die interne Feldgeräteschnittstelle 1718 zur Verfügung, an der beispielsweise über die Schleifkontakte 1719 die dem I²C-Protokoll entsprechenden Werte für ein Display bereitgestellt werden. In dem EPROM 1720 (Eraseable Programmable Read-Only-Memory) kann der gewählte Betriebszustand für das Sende-Empfangsgerät R, T, D hinterlegt werden. Der Wert hierfür kann manuell eingegeben werden oder anhand des verwendeten Sockelgehäusemoduls bestimmt werden.

Darüber hinaus weist das Sende-Empfangsgerät R, T, D einen statischen Speicher 1723 und einen Flashspeicher 1722 auf, die beide mit dem Mikroprozessor 1708 verbunden sind. In dem Flashspeicher 1722 ist beispielsweise die Firmware des Sende-Empfangsgerätes R, T, D hinterlegt. In Abhängigkeit von der Rolle, die das Sende-Empfangsgerät bei der drahtlosen Kommunikation einnimmt, kann die entsprechende Firmware geladen oder ausgeführt werden.

In dem Blockschaltbild der Fig. 17 ist auch die Klemmenschaltung 1726 dargestellt. Die auf der Klemmenschaltung 1720 dargestellten Anschlüsse 1400, 1401, 1402, 1403, die Optokoppler 1606, 1607, der Übertrager 1608 und der Gegentaktwandler 1724 sind im Wesentlichen in dem Sockelgehäusemodul 701 untergebracht. Dagegen sind die Netzteilschaltung 1600 und die Digitalschaltung 1721 sowie der Mikroprozessor 1708 und das Funkmodul 1604 in dem Kopfgehäusemodul 700 untergebracht.

Die Digitalschaltung 1721 umfasst die Pulsweitenmodulatoren 1709, 1710, die Tiefpassfilter 1711, 1712, die HART^{®}-Anpassungseinrichtung 1609 und die SpannungsFrequenzumsetzungsschaltung 1713.

Die Klemmenschaltung 1726 umfasst den ersten Digitalanschluss 1402 und den zweiten Digitaleingang 1403. Der digitale Eingang 1402 führt auf den Optokoppler 1606 und auf den Mikroprozessor 1708. Ebenso führt der zweite digitale Eingang 1403 über den Optokoppler 1607 an den Mikroprozessor 1708. Über den Übertrager 1608 werden die Leuchtdioden der Optokoppler 1606 und 1607 mit Strom versorgt.

Die Klemmschaltung weist ebenfalls den HART^{®}-Eingang 1401, HART^{®}-Ausgang 1401 oder den 4...20mA-Ausgang 1401 auf und den analogen 4...20mA-Eingang 1400. Dabei ist die Funktion, ob der Anschluss 1401 als HART^{®}-Eingang, als HART^{®}-Ausgang oder als 4...20mA-Signalausgang eingesetzt wird, über den Mikroprozessor 1708 festgelegt.

Die Versorgungsschaltung 1600, das Funkmodul 1604, der Mikroprozessor 1708 und die Digitalschaltung 1721 sind für das Sende-Empfangsgerät unabhängig von dem Betriebszustand als drahtlose Sendeeinrichtung T, als drahtlose Empfangseinrichtung R oder drahtlose Anzeigeeinrichtung D vorhanden. Die Anschlussschaltung 1726 kann jedoch mittels Auswechseln des Sockelgehäusemoduls 701 und dadurch der Klemmenschaltung 1726 gewechselt werden. Ob die Ein- bzw. Ausgänge 1400, 1401, 1402 oder 1403 als Eingänge bzw. Ausgänge konfiguriert sind, hängt von dem jeweiligen Betriebszustand, in dem sich das Sende-Empfangsgerät R, T, D befindet, ab.

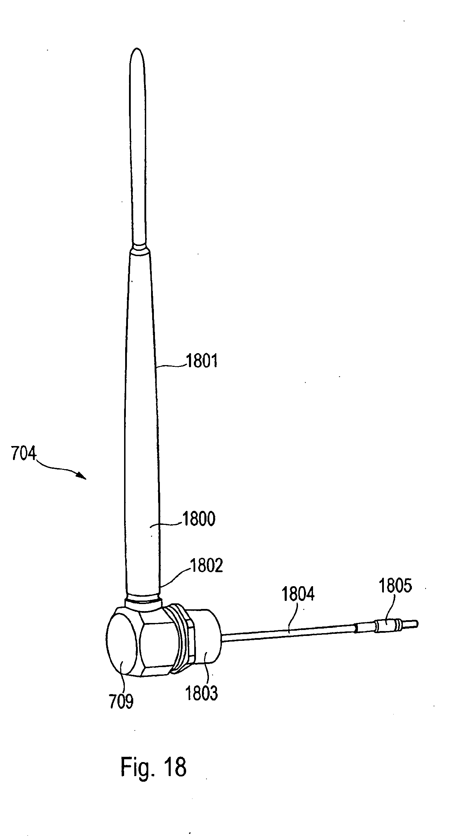

Fig. 18 zeigt die perspektivische Darstellung einer Antenne gemäß einem exemplarischen Ausführungsbeispiel der vorliegenden Erfindung. Die Antenne 704 weist dabei das Gelenk 1800 auf. Mittels des Gelenks 1800 lässt sich ein Winkel zwischen dem Antennenstab 1801 und der Antennenbefestigung 1802 in einem Bereich zwischen 90° und 270° einstellen. In Fig. 18 ist ein Winkel von 180° zwischen der Antennenbefestigung und dem Antennenstab 1801 dargestellt. Die Antennenbefestigung 1802 weist einen Winkel von 90° zu der Achse des Gewindes 1803 auf.

Mittels der Schraubverbindung 709 kann eine Verbindung zwischen dem Antennenstab 1801 und dem Kopfgehäusemodul 700 hergestellt werden. Mittels dem Anschlussgewinde 1803 kann der Antennenstab 1801 und die Verschraubung 709 an dem Kopfgehäusemodul 700 befestigt werden. Das Gewinde 1803 kann als M20x1,5 oder alternativ als ½"NPT-Gewinde ausgebildet sein. Die elektrische Verbindung der Antenne mit dem Funkmodul 1604 kann über das Koaxialkabel 1804 und den Koaxialstecker 1805 erfolgen.

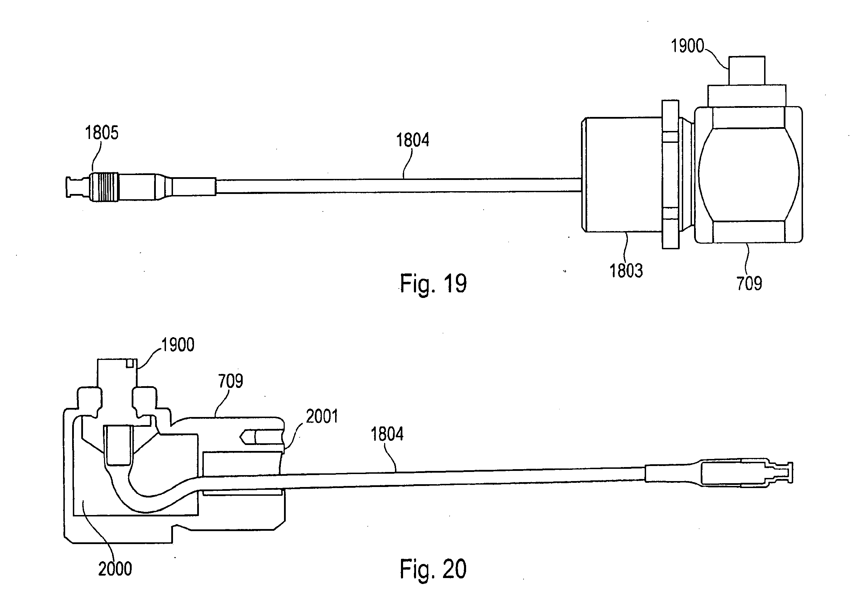

Fig. 19 zeigt eine Seitenansicht eines Befestigungselements für eine Antenne gemäß einem exemplarischen Ausführungsbeispiel der vorliegenden Erfindung. In der Fig. 19 ist die Verschraubung 709 dargestellt. An dem koaxialen Antennenanschluss 1900 kann der Antennenstab 1801 und insbesondere die Antennenbefestigung 1802 angekoppelt werden. Die axiale Richtung des koaxialen Antennenanschluss 1900 ist rechtwinklig zur axialen Richtung des Schraubgewindes 1803 angeordnet. Die Verschraubung 709 ist aus Metall gefertigt und in ihr ist das Koaxialkabel 1804 geführt, dessen auf Fig. 19 bezogenes rechtes Ende in den Antennenanschluss 1900 mündet. Das linke Ende weist den Koaxialstecker 1805 zur Kopplung mit dem Funkmodul 1605 auf.

Fig. 20 zeigt eine Schnittansicht eines Befestigungselements für eine Antenne gemäß einem exemplarischen Ausführungsbeispiel der vorliegenden Erfindung. Die Fig. 20 zeigt den inneren Aufbau des Verbindungselements 709. Der koaxiale Anschlussstecker 1900 ist mit dem Koaxialleiter 1804 im Inneren des Befestigungselements 709 gekoppelt. In dem ersten Hohlraum 2000 des Befestigungselements 709 wird die Koaxialleitung 1804 unter Einhaltung eines vorgegebenen Biegeradius umgelenkt, um aus der Bohrung 2001 heraustreten zu können. Somit kann eine Antenne, die an dem Koaxialstecker 1900 befestigt wird, parallel zu der Kopfgehäusemodulwand angeordnet werden.

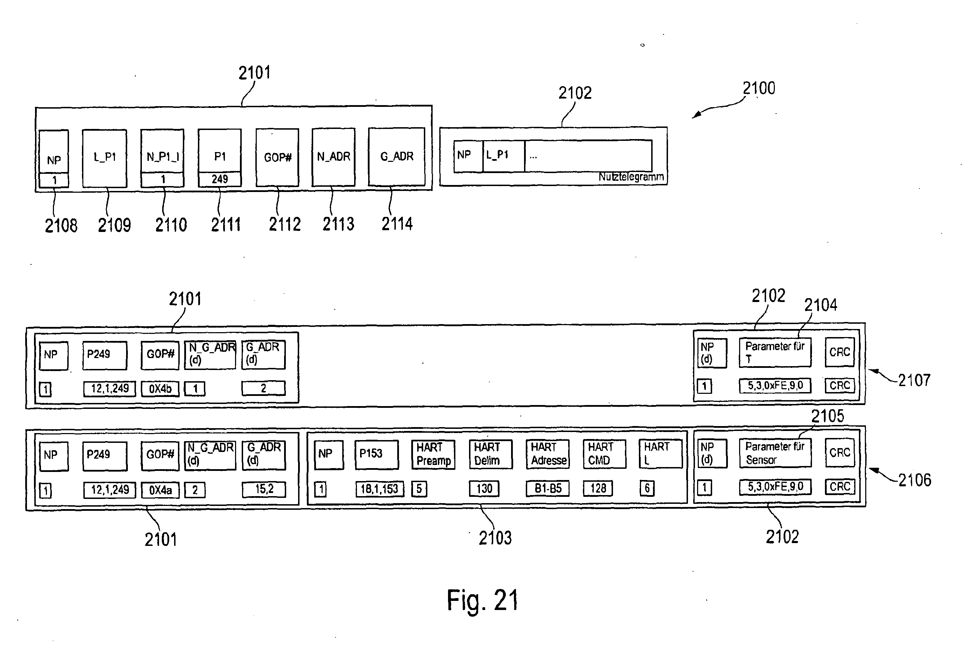

Fig. 21 zeigt ein Nachrichtenformat eines proprietären Übertragungsprotokolls gemäß einem exemplarischen Ausführungsbeispiel der vorliegenden Erfindung. Dieses Nachrichtenformat kommt beispielsweise bei der in Fig. 3 dargestellten drahtlosen Messwertübertragungsanordnung zum Einsatz, um zwischen dem Datensammler S und der drahtlosen Empfangseinrichtung T oder zwischen dem Datensammler S und dem Sensor 100 zu kommunizieren.

Das erweiterte Nachrichtenformat, insbesondere das erweiterte Datenpaket 2100, weist die Protokollerweiterung 2101 und das Nutztelegramm 2102 auf. Die Protokollerweiterung 2101 umfasst den Parameter NP 2108, der fest auf 1 gesetzt ist. Das Längenfeld L_P1 2109 umfasst die Länge des Nutztelegramms 2102 zusätzlich zu dem in dem Feld 2113 gespeicherten Wert und zuzüglich dem Wert 5. Das Feld N_P_I 2110 weist immer den konstanten Wert 1 auf. In dem Parameterfeld P1 2111 wird ein Parameterwert vorgesehen, der einem Datensammler S oder einem Parametriergerät die Anweisung zum Durchreichen des Paketes gibt. Weiter umfasst die Protokollerweiterung 2101 das Feld GOP# 2112 und das Feld N_ADR 2113. Schließlich umfasst die Protokollerweiterung 2101 das Feld G_ADR. Über die Anzahl der vorhandenen Felder N_ADR 2113 kann bestimmt werden, für welches Gerät eine Nachricht oder ein Telegramm bestimmt ist. Wird nämlich ein Paket über die verschiedenen Auswertegeräte, Parametriervorrichtungen oder Sende-Empfangsgeräte geroutet, betrachtet jedes Gerät, das das Paket passiert, die Adressinformation N_ADR 2113 und entfernt das entsprechende Feld, bis das Ziel erreicht ist. So kann über mehrere Geräte hindurchkommuniziert werden.

Das Protokollerweiterungsfeld 2101 wird sozusagen als Header dem Nutztelegramm 2102 vorangestellt. Der Erweiterungsheader 2101 wird von der drahtlosen Empfangseinrichtung R interpretiert und entsprechend der gespeicherten Parameter wird das Nutztelegramm 2102 weitergeleitet.

Mittels dieser Protokollerweiterung, die über die Verbindung zwischen einer Parametriereinrichtung und der drahtlosen Empfangseinrichtung R stattfindet, können zwei Fälle unterschieden werden. Zunächst kann im ersten Fall mit dem Protokoll 2107 eine Anweisung von der drahtlosen Empfangseinrichtung R an die drahtlose Sendeeinrichtung T gerichtet werden. Dazu umfasst das Nachrichtentelegramm 2107 den Erweiterungsheader 2101 und das Nutzsignal 2102 mit dem Parameter für die drahtlose Empfangseinrichtung 2104. Das Nachrichtenformat 2107 wird bei einer Übertragung wie in Fig. 2 dargestellt verwendet. Wenn die drahtlose Empfangseinrichtung R das Datentelegramm 2107 empfängt, wird in der drahtlosen Empfangseinrichtung R die Adressinformation aus dem Parameter 2111 ausgewertet. Die Adresse der anzusprechenden drahtlosen Sendeeinrichtung T wird aus dem Adressfeld G_ADR 2114 übernommen. Ein neues Datentelegramm wird zusammengestellt und der Parameter für die drahtlose Sendeeinrichtung T wird von der drahtlosen Empfangseinrichtung R über die Funkverbindung 200 übertragen. Die drahtlose Sendeeinrichtung T, die mit der Adresse in dem Adressfeld G_ADR übereinstimmt, ist für die Beantwortung des Telegramms zuständig.

Das Telegramm 2106 zeigt eine Übertragung gemäß einer Messwertübertragungsanordnung, wie in Fig. 3 dargestellt. Wenn der Datensammler S das Nachrichtentelegramm 2106 empfängt, wertet der Datensammler S die Adressinformation aus dem Parameter 2111 aus. Die Adresse der anzusprechenden drahtlosen Empfangseinrichtung R ist in dem Adressinformationsfeld G_ADR 2114 gespeichert. Die Adressinformation aus dem Adressfeld G_ADR wird übernommen und ein neues Nachrichtentelegramm wird in dem Datensammler S zusammengestellt. Dieses Datendiagramm wird an die angeschlossene drahtlose Empfangseinrichtung R übertragen. Die für den Datensammler bestimmte Header-Information 2101 wird dabei entfernt und die Nutzdaten 2103 und 2102 werden an die drahtlose Empfangseinrichtung R weitergeleitet. Die drahtlose Empfangseinrichtung R stellt ein neues Übertragungstelegramm zusammen und überträgt dieses neue Übertragungstelegramm über die Funkschnittstelle 200 an die drahtlose Sendeeinrichtung T. Die drahtlose Sendeeinrichtung T erkennt, dass sich in dem Nutztelegramm 2102 eine Anfrage an den angeschlossenen HART^{®}-Sensor befindet und die drahtlose Sendeeinrichtung T gibt das Nutztelegramm 2102 und insbesondere den Parameter für den Sensor 2105 an den Sensor 100 weiter.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sende-Empfangsgerät zur drahtlosen Übertragung eines Feldgerätesignals an ein Auswertegerät für ein Füllstandmessgerät oder für eine Grenzstanderfassungsmesseinrichtung, aufweisend:
eine Funkschnittstelle (204, 205), zum drahtlosen Kommunizieren;
eine Feldgeräteschnittstelle (201, 202, 206), zum Austausch des Feldgerätesignals;
wobei die Funkschnittstelle (204, 205) und die Feldgeräteschnittstelle (201, 202, 206) derart gekoppelt sind, dass das Feldgerätesignal zwischen der Funkschnittstelle (204, 205) und der Feldgeräteschnittstelle (201, 202, 206) gewandelt wird; **dadurch gekennzeichnet dass**
die Feldgeräteschnittstelle (201, 202, 206) derart ausgebildet ist, dass in einem ersten Betriebszustand an der Feldgeräteschnittstelle (201, 202, 206) eine feldgerätspezifische Funktion zur Steuerung des Feldgeräts bereitgestellt wird;
wobei die Feldgeräteschnittstelle (201, 202, 206) derart ausgebildet ist, dass in einem zweiten Betriebszustand an der Feldgeräteschnittstelle (201, 202, 206) eine auswertegerätspezifische Funktion zur Bereitstellung eines Messwerts bereitgestellt wird;
wobei die Wahl des Betriebszustands für das Sende-Empfangsgerät (R, T, D) festlegt, ob das Sende-Empfangsgerät auswertegeräteseitig oder feldgeräteseitig eingesetzt wird; und
wobei das Sende-Empfangsgerät (R, T, D) eingerichtet ist, in dem ersten Betriebszustand und in dem zweiten Betriebszustand eine unterschiedliche Rolle in einer Messwertübertragungsanordnung einzunehmen.

2. Sende-Empfangsgerät nach Anspruch 1,
wobei das Feldgerätesignal ausgewählt ist aus der Gruppe umfassend ein HART^{®}-Signal, ein Profibus-Signal, ein Fieldbus Foundation Signal, ein 4...20 mA Signal, ein I²C Signal und ein Schalt Signal.

3. Sende-Empfangsgerät nach Anspruch 1,
wobei die Feldgeräteschnittstelle (201, 202, 206) als eine interne Schnittstelle (1719) ausgebildet ist.

4. Sende-Empfangsgerät nach einem der Ansprüche 1 bis 3,
wobei die Funkschnittstelle (204, 205) eine Leistungsbegrenzungseinrichtung aufweist.

5. Sende-Empfangsgerät nach einem der Ansprüche 1 bis 4,
wobei das Sende-Empfangsgerät (R, T, D) mittels einer abnehmbaren Anzeige-/Bedieneinrichtung (801) parametriert ist.

6. Sende-Empfangsgerät nach einem der Ansprüche 1 bis 5,
wobei das Sende-Empfangsgerät (R, T, D) zwischen einer Masterfunktion und einer Slavefunktion umgeschaltet wird.

7. Sende-Empfangsgerät nach einem der Ansprüche 1 bis 6, ferner aufweisend:
ein abgesetztes Schnittstellengerät (S) wobei das abgesetzte Schnittstellengerät (S) eine Vielzahl von Feldgeräteschnittstellen (302, 303) aufweist;
wobei das abgesetzte Schnittstellengerät (S) mittels einer der Vielzahl von Feldgeräteschnittstellen (302, 303) an das Sende-Empfangsgerät (R, T, D) gekoppelt ist;
wobei mindestens eine der Vielzahl von Feldgeräteschnittstellen (302, 303) ausgebildet ist, ein Feldgerätesignal eines entfernten Feldgeräts (100, 500, 601, 602) bereitzustellen.

8. Sende-Empfangsgerät nach einem der Ansprüche 1 bis 7, ferner aufweisend:
ein modulares Gehäuse (708) mit einem Kopfgehäusemodul (700) und einem Sockelgehäusemodul (701);
wobei das Sockelgehäusemodul (701) ausgebildet ist eine Feldgeräteschnittstelle (201, 201, 202, 206, 300, 301, 302) bereitzustellen;
wobei das Sockelgehäusemodul (701) an das Kopfgehäusemodul (700) gekoppelt ist.

9. Sende-Empfangsgerät nach Anspruch 8,
wobei das Sockelgehäusemodul (701) ausgebildet ist, den Betriebszustand des Sende-Empfangsgeräts (R, T, D) zu bestimmen.

10. Sende-Empfangsgerät nach Anspruch 8 oder 9,
wobei das Sockelgehäusemodul (701) ausgebildet ist, in Abhängigkeit von der bereitgestellten Schnittstelle (1300, 1400, 1401, 1402, 1403) einen Typ des Sende-Empfangsgeräts (R, T, D) zu bestimmen.

11. Drahtlose Messwertübertragungsanordnung, aufweisend:
ein erstes Sende-Empfangsgerät (T1, T2, T3) nach einem der Ansprüche 1 bis 10;
ein zweites Sende- Empfangsgerät (R) nach einem der Ansprüche 1 bis 10;
wobei das erste Sende-Empfangsgerät (T1, T2, T3) in dem ersten Betriebszustand ist;
wobei das zweite Sende-Empfangsgerät (R) in dem zweiten Betriebszustand ist;
wobei die drahtlose Messwertübertragungsanordnung eingerichtet ist, ein an der Feldgeräteschnittstelle (502, 506, 603) des ersten Sende-Empfangsgerät aufgenommenes Feldgerätesignal an der Feldgeräteschnittstelle des zweiten Sende-Empfangsgerät (202) bereitzustellen.

12. Drahtlose Messwertübertragungsanordnung nach Anspruch 11, ferner aufweisend:
ein drittes Sende-Empfangsgerät (T4, T5) nach einem der Ansprüche 1 bis 10;
ein abgesetztes Schnittstellengerät (S) mit einer Vielzahl von Feldgeräteschnittstellen (302, 203);
wobei das dritte Sende-Empfangsgerät (T4, T5) in dem ersten Betriebszustand ist;
wobei das abgesetzte Schnittstellengerät (S) mittels einer ersten Feldgeräteschnittstelle (302) an das zweite Sende-Empfangsgerät (R) gekoppelt ist;
wobei eine zweite Feldgeräteschnittstelle (303) des abgesetzten Schnittstellengeräts (S) ausgebildet ist, einen an der Feldgeräteschnittstelle (603) des ersten Sende-Empfangsgerät (T3) aufgenommenen Messwert bereitzustellen;
wobei eine dritte Feldgeräteschnittstellen (303) des abgesetzten Schnittstellengeräts (S) ausgebildet ist, einen an der Feldgeräteschnittstelle (201) des dritten Sende-Empfangsgerät (T4, T5) aufgenommenen Messwert bereitzustellen.

13. Verfahren zur drahtlosen Übertragung eines Feldgerätesignals mittels eines Sende-Empfangsgerätes für ein Füllstandmessgerät oder eine Grenzstanderfassungsmesseinrichtung, aufweisend:
Auswählen zwischen einem ersten Betriebszustand und einem zweiten Betriebszustand für das Sende-Empfangsgerät (R, T, D), wobei die Wahl des Betriebszustands für das Sende-Empfangsgerät festlegt, ob das Sende-Empfangsgerät auswertegeräteseitig oder feldgeräteseitig eingesetzt wird;
Wandeln des Feldgerätesignals zwischen einer Funkschnittstelle (204, 205) des Sende-Empfangsgerätes (R, T, D) und einer Feldgeräteschnittstelle (201) des Sende-Empfangsgerätes (R, T, D);
Bereitstellen einer feldgerätspezifischen Funktion zur Steuerung des Feldgeräts an der Feldgeräteschnittstelle (201), wenn sich das Sende-Empfangsgerät (T) in dem ersten Betriebszustand befindet;
Bereitstellen einer auswertegerätspezifischen Funktion zur Bereitstellung eines Messwerts an der Feldgeräteschnittstelle (202), wenn sich das Sende-Empfangsgerät (R, D) in dem zweiten Betriebszustand befindet;
wobei das Sende-Empfangsgerät (R, T, D) eingerichtet ist, in dem ersten Betriebszustand und in dem zweiten Betriebszustand eine unterschiedliche Rolle in einer Messwertübertragungsanordnung einzunehmen.

14. Verfahren zur drahtlosen Übertragung nach Anspruch 13, weiter aufweisend:
Auswählen des Sende-Empfangsgerätes (R, T, D) zwischen dem ersten Betriebszustand und dem zweiten Betriebszustand mittels eines Sockelgehäusemoduls.

15. Verfahren zur drahtlosen Übertragung nach Anspruch 13 oder 14, weiter aufweisend:
Auswählen eines Typs des Sende-Empfangsgerätes (R, T, D) anhand einer von dem Sende-Empfangsgerät (R, T, D) bereitgestellten Schnittstelle (1300, 1400, 1401, 1402, 1403).

## Claims

1. A transceiver for wireless transmission of a field device signal to an evaluation device, for a fill-level measuring device or for a level-detection measuring device, comprising:
a radio interface (204, 205) for wireless communication;
a field device interface (201, 202, 206) for exchanging the field device signal;
wherein the radio interface (204, 205) and the field device interface (201, 202, 206) are coupled in such a manner that the field device signal is converted between the radio interface (204, 205) and the field device interface (201, 202, 206); **characterised in that**
the field device interface (201, 202, 206) is designed in such a manner that in a first operating state at the field device interface (201, 202, 206) a field-device specific function for controlling the field device is provided;
wherein the field device interface (201, 202, 206) is designed in such a way that in a second operating state at the field device interface (201, 202, 206) an evaluation-device-specific function for providing a measured value is provided;
wherein the selection of the operating state for the transceiver (R, T, D) determines whether the transceiver is used on the side of the evaluation device or on the side of the field device; and
wherein the transceiver (R, T, D) is designed to assume a different role in a measured-value transmission arrangement in the first operating state and in the second operating state.

2. The transceiver according to claim 1,
wherein the field device signal is selected from the group comprising a HART® signal, a Profibus signal, a Fieldbus Foundation signal, a 4...20 mA signal, an I²C signal and a switching signal.

3. The transceiver according to claim 1,
wherein the field device interface (201, 202, 206) is designed as an internal interface (1719).

4. The transceiver according to any one of claims 1 to 3, wherein the radio interface (204, 205) comprises a power-limiting device.

5. The transceiver according to any one of claims 1 to 4, wherein the transceiver (R, T, D) is parameterisable by means of a removable display/operating device (801).

6. The transceiver according to any one of claims 1 to 5, wherein the transceiver (R, T, D) is switched over between a master function and a slave function.

7. The transceiver according to any one of claims 1 to 6, further comprising:
a detached interface device (S), wherein the detached interface device (S) comprises a multitude of field device interfaces (302, 303);
wherein the detached interface device (S) is coupled to the transceiver (R, T, D) by means of a multitude of field device interfaces (302, 303);
wherein at least one of the multitude of field device interfaces (302, 303) is designed to provide a field device signal of a remote field device (100, 500, 601, 602).

8. The transceiver according to any one of claims 1 to 7, further comprising:
a modular housing (708) with a head housing module (700) and a base housing module (701);
wherein the base housing module (701) is designed to provide a field device interface (201, 201, 202, 206, 300, 301, 302);
wherein the base housing module (701) is coupled to the head housing module (700).

9. The transceiver according to claim 8,
wherein the base housing module (701) is designed to determine the operating state of the transceiver (R, T, D).

10. The transceiver according to claim 8 or 9,
wherein the base housing module (701) is designed to determine a type of transceiver (R, T, D) depending on the provided interface (1300, 1400, 1401, 1402, 1403).

11. A wireless measured-value transmission arrangement, comprising:
a first transceiver (T1, T2, T3) according to any one of claims 1 to 10;
a second transceiver (R) according to any one of claims 1 to 10;
wherein the first transceiver (T1, T2, T3) is in the first operating state;
wherein the second transceiver (R) is in the second operating state;
wherein the wireless measured-value transmission arrangement is designed to provide a field device signal picked up at the field device interface (502, 506, 603) of the first transceiver at the field device interface of the second transceiver (202).

12. The wireless measured-value transmission arrangement according to claim 11, further comprising:
a third transceiver (T4, T5) according to any one of claims 1 to 10;
a detached interface device (S) with a multitude of field device interfaces (302, 203);
wherein the third transceiver (T4, T5) is in the first operating state;
wherein the detached interface device (S) is coupled to the second transceiver (R) by means of a first field device interface (302);
wherein a second field device interface (303) of the detached transceiver (S) is designed to provide a measured value picked up at the field device interface (603) of the first transceiver (T3);
wherein a third field device interface (303) of the detached interface device (S) is designed to provide a measured value picked up at the field device interface (201) of the third transceiver (T4, T5).

13. A method for wireless transmission of a field device signal by means of a transceiver for a fill-level measuring device or a level-detection measuring device, comprising:
selecting between a first operating state and a second operating state for the transceiver (R, T, D), wherein
the selection of the operating state for the transceiver determines whether the transceiver is used on the side of the evaluation device or on the side of the field device;
converting the field device signal between a radio interface (204, 205) of the transceiver (R, T, D) and
a field device interface (201) of the transceiver (R, T, D);
providing a field-device-specific function for controlling the field device at the field device interface (201) when the transceiver (T) is in the first operating state;
providing an evaluation-device-specific function for providing a measured value at the field device interface (202) when the transceiver (R, D) is in the second operating state;
wherein the transceiver (R, T, D) is designed to assume a different role in a measured-value transmission arrangement in the first operating state and in the second operating state.

14. The method for wireless transmission according to claim 13, further comprising:
selecting the transceiver (R, T, D) between the first operating state and the second operating state by means of a base housing module.

15. The method for wireless transmission according to claim 13 or 14, further comprising:
selecting a type of transceiver (R, T, D) by means of an interface (1300, 1400, 1401, 1402, 1403) provided by the transceiver (R, T, D).

## Revendications

1. Emetteur-récepteur pour la transmission sans fil d'un signal d'appareil de terrain à un appareil d'évaluation, pour un appareil de mesure de niveau ou pour un dispositif de mesure et de détection de niveau limite, comportant :
une interface radio (204, 205) pour la communication sans fil,
une interface d'appareil de terrain (201, 202, 206) pour l'échange du signal d'appareil de terrain,
dans lequel l'interface radio (204, 205) et l'interface d'appareil de terrain (201, 202, 206) sont couplées de telle sorte que le signal d'appareil de terrain est transformé entre l'interface radio (204, 205) et l'interface d'appareil de terrain (201, 202, 206), **caractérisé en ce que**
l'interface d'appareil de terrain (201, 202, 206) est conçue de telle sorte que dans un premier état de fonctionnement au niveau de l'interface d'appareil de terrain (201, 202, 206), une fonction spécifique à un appareil de terrain pour la commande de l'appareil de terrain est rendue disponible,
dans lequel l'interface d'appareil de terrain (201, 202, 206) est conçue de telle sorte que dans un second état de fonctionnement au niveau de l'interface d'appareil de terrain (201, 202, 206), une fonction spécifique à un appareil d'évaluation pour la mise à disposition d'une valeur de mesure est rendue disponible,
dans lequel la sélection de l'état de fonctionnement pour l'émetteur-récepteur (R, T, D) détermine si l'émetteur-récepteur est utilisé côté appareil d'évaluation ou côté appareil de terrain, et
dans lequel l'émetteur-récepteur (R, T, D) est configuré pour jouer un rôle différent dans un agencement de transmission de valeur de mesure dans le premier état de fonctionnement et dans le second état de fonctionnement.

2. Emetteur-récepteur selon la revendication 1,
dans lequel le signal d'appareil de terrain est choisi parmi le groupe comportant un signal HART®, un signal Profibus, un signal Fieldbus Foundation, un signal de 4 à 20 mA, un signal I²C et un signal de commutation.

3. Emetteur-récepteur selon la revendication 1,
dans lequel l'interface d'appareil de terrain (201, 202, 206) est conçu sous la forme d'une interface interne (1719).

4. Emetteur-récepteur selon l'une quelconque des revendications 1 à 3,
dans lequel l'interface radio (204, 205) comporte un dispositif de limitation de puissance.

5. Emetteur-récepteur selon l'une quelconque des revendications 1 à 4,
dans lequel l'émetteur-récepteur (R, T, D) est paramétré au moyen d'un dispositif d'affichage/commande (801) amovible.

6. Emetteur-récepteur selon l'une quelconque des revendications 1 à 5,
dans lequel l'émetteur-récepteur (R, T, D) est commuté entre une fonction maître et une fonction esclave.

7. Emetteur-récepteur selon l'une quelconque des revendications 1 à 6, comportant en outre :
un dispositif d'interface distant (S), ledit dispositif d'interface distant (S) comportant une pluralité d'interfaces d'appareil de terrain (302, 303),
dans lequel le dispositif d'interface distant (S) est couplé à l'émetteur-récepteur (R, T, D) au moyen d'une interface parmi la pluralité d'interfaces d'appareil de terrain (302, 303),
dans lequel au moins une interface parmi la pluralité d'interfaces d'appareil de terrain (302, 303) est conçue pour rendre disponible un signal d'appareil de terrain d'un appareil de terrain éloigné (100, 500, 601, 602).

8. Emetteur-récepteur selon l'une quelconque des revendications 1 à 7, comportant également :
un boîtier modulaire (708) muni d'un module de boîtier de tête (700) et d'un module de boîtier de socle (701),
dans lequel le module de boîtier de socle (701) est conçu pour rendre disponible une interface d'appareil de terrain (201, 202, 206, 300, 301, 302),
dans lequel le module de boîtier de socle (701) est couplé au module de boîtier de tête (700).

9. Emetteur-récepteur selon la revendication 8,
dans lequel le module de boîtier de socle (701) est conçu pour déterminer l'état de fonctionnement de l'émetteur-récepteur (R, T, D).

10. Emetteur-récepteur selon la revendication 8 ou 9,
dans lequel le module de boîtier de socle (701) est conçu pour déterminer un type de l'émetteur-récepteur (R, T, D) en fonction de l'interface disponible (1300, 1400, 1401, 1402, 1403).

11. Agencement de transmission sans fil de valeur de mesure, comportant :
un premier émetteur-récepteur (T1, T2, T3) selon l'une quelconque des revendications 1 à 10,
un deuxième émetteur-récepteur (R) selon l'une quelconque des revendications 1 à 10,
dans lequel le premier émetteur-récepteur (T1, T2, T3) est dans le premier état de fonctionnement,
dans lequel le deuxième émetteur-récepteur (R) est dans le second état de fonctionnement,
dans lequel l'agencement de transmission sans fil de valeur de mesure est configuré pour rendre un signal d'appareil de terrain reçu sur l'interface d'appareil de terrain (502, 506, 603) du premier émetteur-récepteur, disponible au niveau de l'interface d'appareil de terrain du second émetteur-récepteur (202).

12. Agencement de transmission sans fil de valeur de mesure selon la revendication 11, comportant en outre :
un troisième émetteur-récepteur (T4, T5) selon l'une quelconque des revendications 1 à 10,
un dispositif d'interface distant (S) comportant une pluralité d'interfaces d'appareil de terrain (302, 203),
dans lequel le troisième émetteur-récepteur (T4, T5) est dans le premier état de fonctionnement,
dans lequel le dispositif d'interface distant (S) est couplé au deuxième émetteur-récepteur (R) au moyen d'une première interface d'appareil de terrain,
dans lequel une deuxième interface d'appareil de terrain (303) du dispositif d'interface distant (S) est conçue pour rendre une valeur de mesure reçue disponible sur l'interface d'appareil de terrain (603) du premier émetteur-récepteur (T3),
dans lequel une troisième interface d'appareil de terrain (303) du dispositif d'interface distant (S) est conçue pour rendre une valeur de mesure reçue disponible sur l'interface d'appareil de terrain (201) du troisième émetteur-récepteur (T4, T5).

13. Procédé pour la transmission sans fil d'un signal d'appareil de terrain au moyen d'un émetteur-récepteur pour un appareil de mesure de niveau ou un dispositif de mesure et de détection de niveau limite, comportant les étapes consistant à :
effectuer une sélection entre un premier état de fonctionnement et un second état de fonctionnement pour l'émetteur-récepteur (R, T, D), dans lequel la sélection de l'état de fonctionnement pour l'émetteur-récepteur détermine si l'émetteur-récepteur est utilisé côté appareil d'évaluation ou côté appareil de terrain,
échanger le signal d'appareil de terrain entre une interface radio (204, 205) de l'émetteur-récepteur (R, T, D) et une interface d'appareil de terrain (201) de l'émetteur-récepteur (R, T, D),
mettre à disposition une fonction spécifique à un appareil de terrain pour la commande de l'appareil de terrain au niveau de l'interface d'appareil de terrain (201) lorsque l'émetteur-récepteur (T) se trouve dans le premier état de fonctionnement,
mettre à disposition une fonction spécifique à un appareil d'évaluation pour la mise disposition d'une valeur de mesure au niveau de l'interface d'appareil de terrain (202) lorsque l'émetteur-récepteur (R, T, D) se trouve dans le second état de fonctionnement,
dans lequel l'émetteur-récepteur (R, T, D) est configuré pour jouer un rôle différent dans un agencement de transmission de valeur de mesure dans le premier état de fonctionnement et dans le second état de fonctionnement.

14. Procédé de transmission sans fil selon la revendication 13, comportant également l'étape consistant à :
sélectionner l'émetteur-récepteur (R, T, D) entre le premier état de fonctionnement et le second état de fonctionnement au moyen d'un module de boîtier de socle.

15. Procédé de transmission sans fil selon la revendication 13 ou 14, comportant en outre l'étape consistant à :
sélectionner un type de l'émetteur-récepteur (R, T, D) au moyen d'une interface (1300, 1400, 1401, 1402, 1403) mise à disposition par l'émetteur-récepteur (R, T, D).
